(19) Europäisches Patentamt
European Patent Office
Office européen des brevets

(11) **EP 4 550 698 A1**

(12) **EUROPEAN PATENT APPLICATION**
published in accordance with Art. 153(4) EPC

(43) Date of publication:
**07.05.2025 Bulletin 2025/19**

(21) Application number: **22954265.9**

(22) Date of filing: **08.08.2022**

(51) International Patent Classification (IPC):
*H04L 1/00* $^{(2006.01)}$

(52) Cooperative Patent Classification (CPC):
**H04L 1/00**

(86) International application number:
**PCT/CN2022/110967**

(87) International publication number:
**WO 2024/031285 (15.02.2024 Gazette 2024/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **TONG, Jiajie
Shenzhen, Guangdong 518129 (CN)**

• **ZHANG, Huazi
Shenzhen, Guangdong 518129 (CN)**
• **WANG, Xianbin
Shenzhen, Guangdong 518129 (CN)**
• **LI, Rong
Shenzhen, Guangdong 518129 (CN)**
• **WANG, Jun
Shenzhen, Guangdong 518129 (CN)**

(74) Representative: **Maiwald GmbH
Engineering
Elisenhof
Elisenstrasse 3
80335 München (DE)**

(54) **DATA PROCESSING METHOD, APPARATUS AND DEVICE**

(57) This application provides a data processing method, an apparatus, and a device, to implement an encoding method supporting blind decoding. When a quantity of information bits is large, the information bits need to be carried in a plurality of to-be-encoded blocks. In this case, during to-be-encoded block division (that is, code block division), a part of information bits in a subsequent code block may be moved to a previous code block, so that a sudden performance change caused by an excessively small quantity of information bits in the subsequent code block during block switching between adjacent code blocks in a decoding process can be avoided.

FIG. 4

## Description

## TECHNICAL FIELD

This application relates to the field of communication technologies, and in particular, to a data processing method, an apparatus, and a device.

## BACKGROUND

A polar code (Polar code) is a channel encoding scheme that can be strictly proved to "reach" a Shannon channel capacity, features good performance, low complexity, and the like, and may be applied to a 5th generation (5th generation, 5G) communication system and a future communication system. A mother code length of the polar code is an integer power of 2 (that is, $2^n$). When a code length $N$ required for actual communication is not the mother code length (for example, is not $2^n$), a code length matching process needs to be further implemented in a manner of puncturing, retransmission, and the like, to implement rate matching. In addition, when a total quantity of sent bits is greater than the mother code length, segmentation processing needs to be performed (that is, the bits are divided into a plurality of code blocks), and then based on a quantity of code blocks and a quantity of information bits in each code block, an information bit is constructed and rate matching is performed. However, for the foregoing scenario, an existing method for constructing an information bit and performing rate matching cannot implement stream decoding, and also has difficulty in implementing blind decoding.

## SUMMARY

This application provides a data processing method, an apparatus, and a device, so that stream decoding can be implemented for encoded data obtained by using the method, and a sudden performance change caused by an excessively small quantity of information bits in a code block during switching between adjacent code blocks in a decoding process can be avoided.

According to a first aspect, this application provides a data processing method. The data processing method may be performed by a terminal device or a network device. An example in which the terminal device is an execution body, and the terminal device is an encoding side is used. The terminal device obtains $K$ information bits, and determines a quantity of to-be-encoded blocks based on the $K$ information bits. When $K$ is less than or equal to $M \times R + k$ (which may be represented as $K \leq M \times R + k$), the quantity of to-be-encoded blocks is $C = 1$; or when $K$ is greater than $M \times R + k$ (which may be represented as $K > M \times R + k$), the quantity of to-be-encoded blocks is $C > 1$, where quantities of information bits in various to-be-encoded blocks other than a $0^{th}$ to-be-encoded block and a last to-be-encoded block are the same and are all $M \times R$, a quantity of information bits in the last to-be-encoded block is less than or equal to $M \times R$, a quantity of information bits in the $0^{th}$ code block is equal to $M \times R + k$, and $k$ is greater than or equal to 0. The terminal device determines a quantity of information bits in each of $C$ to-be-encoded blocks based on a maximum mother code length $M$ and a code rate $R$, and encodes the $C$ to-be-encoded blocks to obtain and send encoded data.

In the method, when a quantity of information bits is large, the information bits need to be carried in a plurality of to-be-encoded blocks. In this case, during to-be-encoded block division (that is, code block division), a part of information bits in a subsequent code block are moved to a previous code block, so that a sudden performance change caused by an excessively small subsequent code block during code block switching can be avoided.

In a possible implementation, when $C > 1$,

$$C = \left\lceil \frac{K - (M \times R + k)}{M \times R} \right\rceil + 1 \text{, where}$$

quantities of information bits included in the $C$ to-be-encoded blocks are: $I_0 = M \times R + k$, $I_c = M \times R$, where $c$ satisfies $c \in \{1, 2, ..., C - 2\}$, and $I_{C-1} = K - M \times R \times (C - 1) - k$; and

the encoded data includes $C$ code blocks, code lengths of the $C$ code blocks are: $X_{c'} = M$, where $c'$ satisfies $c' \in \{0, 1, 2, ..., C - 2\}$, and $X_{C-1} = E - M \times (C - 1)$, where $E$ is a total code length corresponding to the $K$ information bits.

In the method, when there are the plurality of to-be-encoded blocks, for a to-be-encoded sub-block in each to-be-encoded block, it is designed that a quantity of information bits carried in a last to-be-encoded sub-block in the to-be-encoded block is the smallest, so that the last to-be-encoded sub-block is a rate matching sub-block, to ensure execution of blind decoding.

In a possible implementation, the encoded data includes the $C$ code blocks, each code block includes $m$ code sub-blocks, and a code sub-block is sent via a sending sub-block;

when a code length of a code block is $X$, a quantity of sending sub-blocks for the code block satisfies

$$D = \left\lceil \frac{X}{N'} \right\rceil \text{; and}$$

when the quantity of sending sub-blocks for the code block satisfies $D > S$, a quantity of code sub-blocks in the code block satisfies $m = S$; or
when the quantity of sending sub-blocks for the code block satisfies $D \leq S$, a quantity of code sub-blocks in the code block satisfies $m = D$, where

$N'$ is a code sub-block size; and

$S$ is a maximum value of the quantity of code sub-blocks included in the code block, for example,

$$S = \left\lceil \frac{E}{N'} \right\rceil.$$

In a possible implementation, if a last code sub-block in the code block is a repetition sub-block, a $0^{th}$ sending sub-block to an $(m-1)^{th}$ sending sub-block are the $m$ code sub-blocks, and an $m^{th}$ sending sub-block is obtained by performing repetition based on an $(m-1)^{th}$ code sub-block.

In a possible implementation, if a penultimate code sub-block in the code block is a puncturing sub-block, an $(m-1)^{th}$ sending sub-block is obtained by performing puncturing based on the penultimate code sub-block, and remaining $m-1$ sending sub-blocks are remaining m-1 code sub-blocks.

In the foregoing method, the quantity of sending sub-blocks for the code block is the same as the quantity of code sub-blocks in the code block. In addition, if a repetition mode is used when the code block is sent, the last code sub-block in the code block is the repetition sub-block, and the quantity of sending sub-blocks is the maximum value of the quantity of code sub-blocks. If a puncturing mode is used when the code block is sent, the penultimate code sub-block in the code block is the puncturing sub-block.

In a possible implementation, a length of the sending sub-block for the code block is: $Y_j = N'$, where $j$ satisfies $j \in \{0, 1, 2, ..., D - 2\}$, and $Y_{D-1} = X - (D - 1) * N'$.

In a possible implementation, a quantity of information bits in the code sub-block in the code block is $J_i = A_i$, and $i \in \{0, 1, 2, ..., m - 3\}$, where

when the quantity of code sub-blocks in the code block is $D > S$, $J_{m-2} = A_{m-2}$; or

when the quantity of code sub-blocks in the code block satisfies $D \le S$, a quantity of information bits in an $(m - 2)^{th}$ code sub-block is

$$J_{m-2} = \frac{A_{m-2} \times Y_{D-1}}{N'} - \Delta$$

, $A_{m-2}$ is an $(S - 2)^{th}$ element in an allocation sequence, and $\Delta$ is determined based on a difference between $Y_{D-1}$ and $N'$, whose value is 0 or 1;

a quantity of information bits in an $(m-1)^{th}$ code sub-block is

$$J_{m-1} = I - \sum_{i=0}^{m-2} J_i$$

; and

$A_i$ is an element in the allocation sequence, the allocation sequence is a sequence $\{A_0, A_1, A_2, ..., A_{S-2}\}$ including $S - 1$ variables, and a relationship between elements in the allocation sequence is $A_0 \le A_1 \le ... \le A_{S-2}$.

In the foregoing method, a quantity of information bits in the sending sub-block for the code block and the quantity of information bits in the code sub-block in the code block are designed, to facilitate implementation of stream encoding.

In a possible implementation, the terminal device may divide to-be-encoded information bits into $C$ segments based on a quantity of information bits in each code block; divide each segment of to-be-encoded bits into $m$ sub-segments based on a quantity of information bits in each code sub-block; determine an information bit and a frozen bit of each code sub-block based on a code length $N'$ of each code sub-block and the quantity of information bits in each code sub-block, and construct an information sequence with a size of $m \times 2^n$ based on the quantity $m$ of code sub-blocks; and insert the to-be-encoded information bits into a to-be-encoded sequence based on location information of information bits in the information sequence, and perform modulo two multiplication processing on the to-be-encoded sequence and an encoding matrix $G$ to obtain the encoded data.

The encoding matrix

$$G = \begin{bmatrix} G_{N'} & 0 & \dots & 0 \\ 0 & G_{N'} & \dots & 0 \\ \dots & \dots & \ddots & \dots \\ G_{N'} & G_{N'} & \dots & G_{N'} \end{bmatrix}$$

, $G$ is a matrix with a size of $(m \times 2^n) \times (m \times 2^n)$, $m$ and $n$ are positive integers, the matrix $G_{N'}$ is a polar generator matrix with a size of $2^n \times 2^n$, and the matrix $O$ is an all-zero matrix with a size of $2^n \times 2^n$.

In the method, a new encoding matrix $G$ of a polar code is designed. When the terminal device encodes the to-be-encoded information bits by using the encoding matrix $G$, after receiving a part of information bits in an encoding process, the terminal device may encode the part of information bits and send encoded data, to implement stream encoding and help reduce sizes of an encoder and a buffer in the terminal device.

In a possible implementation, an order of sending the code sub-blocks is:

first sending the $(m-1)^{th}$ sending sub-block, and then successively sending an $i^{th}$ code sub-block, where an arrangement order of $i$ is 0,1,2,..., $m - 2$.

For example, the $(m-1)^{th}$ code sub-block is a $0^{th}$ sending sub-block, a $0^{th}$ code sub-block is a $1^{st}$ sending sub-block, a $1^{st}$ code sub-block is a $2^{nd}$ sending sub-block, by analogy, and an $(m-2)^{th}$ code sub-block is a $(D-1)^{th}$ sending sub-block.

In a possible implementation, an order of sending encoded bits in the sending sub-block is:

sending the encoded bits in reverse order based on the length of the sending sub-block starting from an $(N'-1)^{th}$ location of the sending sub-block.

In the method, the sending sub-block is sent in reverse order, to help directly send the sending sub-block used as the rate matching sub-block to a corresponding decoding address, and reduce complexity and power consumption of data transmission.

It should be noted that the method in the first aspect may alternatively be performed by the network device. In this case, the network device is an encoding side, and the terminal device is a decoding side.

According to a second aspect, this application provides another data processing method. The data processing method may be performed by a terminal device or a network device. An example in which the network device is an execution body, and the network device is a decoding side is used. The network device receives encoded data, and decodes the encoded data. The encoded data is obtained by encoding $C$ to-be-encoded blocks, a quantity of information bits in each of the $C$ to-be-encoded blocks is determined based on a maximum mother code length $M$ and a code rate $R$, and the quantity $C$ of to-be-encoded blocks is determined based on a quantity $K$ of information bits. When $K$ is less than or equal to $M \times R + k$ (which may be represented as $K \leq M \times R + k$), $C = 1$; or when $K$ is greater than $M \times R + k$ (which may be represented as $K > M \times R + k$), $C > 1$, where quantities of information bits in various to-be-encoded blocks other than a $0^{th}$ to-be-encoded block and a last to-be-encoded block are the same and are all $M \times R$, a quantity of information bits in the last to-be-encoded block is less than or equal to $M \times R$, a quantity of information bits in the $0^{th}$ code block is equal to $M \times R + k$, and $k$ is greater than or equal to 0.

In the method, because the encoded data includes a plurality of code blocks, and quantities of information bits in the plurality of code blocks are designed according to a specific rule. In this case, blind decoding can be implemented for the encoded data.

In a possible implementation, when $C > 1$,

$$C = \left\lceil \frac{K - (M \times R + k)}{M \times R} \right\rceil + 1$$
, where

quantities of information bits included in the $C$ to-be-encoded blocks are: $I_0 = M \times R + k$, $I_c = M \times R$, where $c$ satisfies $c \in \{1,2,..., C - 2\}$, and $I_{C-1} = K - M \times R \times (C - 1) - k$; and

the encoded data includes C code blocks, code lengths of the C code blocks are: $X_{c'} = M$, where $c'$ satisfies $c' \in \{0,1,2,..., C - 2\}$, and $X_{C-1} = E - M \times (C - 1)$, where $E$ is a total code length corresponding to the $K$ information bits.

In the method, when there are the plurality of to-be-encoded blocks, for a to-be-encoded sub-block in each to-be-encoded block, it is designed that a quantity of information bits carried in a last to-be-encoded sub-block in the to-be-encoded block is the smallest, so that the last to-be-encoded sub-block is a rate matching sub-block, to ensure execution of blind decoding.

In a possible implementation, the encoded data includes the $C$ code blocks, each code block includes $m$ code sub-blocks, and a code sub-block is sent via a sending sub-block;

when a code length of a code block is $X$, a quantity of sending sub-blocks for the code block satisfies

$$D = \left\lceil \frac{X}{N'} \right\rceil$$
; and

when the quantity of sending sub-blocks for the code block satisfies $D > S$, a quantity of code sub-blocks in the code block satisfies $m = S$; or
when the quantity of sending sub-blocks for the code block satisfies $D \leq S$, a quantity of code sub-blocks in the code block satisfies $m = D$, where
$N'$ is a code sub-block size; and
$S$ is a maximum value of the quantity of code sub-blocks included in the code block, for example,

$$S = \left\lceil \frac{E}{N'} \right\rceil$$
.

In a possible implementation, if a last code sub-block in the code block is a repetition sub-block, a $0^{th}$ sending sub-block to an $(m-1)^{th}$ sending sub-block are the $m$ code sub-blocks, and an $m^{th}$ sending sub-block is obtained by performing repetition based on an $(m-1)^{th}$ code sub-block.

In a possible implementation, if a penultimate code sub-block in the code block is a puncturing sub-block, an $(m-1)^{th}$ sending sub-block is obtained by performing puncturing based on the penultimate code sub-block, and remaining $m-1$ sending sub-blocks are remaining $m-1$ code sub-blocks.

In a possible implementation, a length of the sending sub-block for the code block is: $Y_j = N'$, where $j$ satisfies $j \in \{0,1,2,..., D - 2\}$, and $Y_{D-1} = X - (D - 1) * N'$.

In a possible implementation, a quantity of information bits in the code sub-block in the code block is $J_i = A_i$, and $i \in \{0,1,2,..., m - 3\}$, where

when the quantity of code sub-blocks in the code block is $D > S$, $J_{m-2} = A_{m-2}$; or
when the quantity of code sub-blocks in the code block satisfies $D \leq S$, a quantity of information bits in an $(m - 2)^{th}$ code sub-block is

$$J_{m-2} = \frac{A_{m-2} \times Y_{D-1}}{N'} - \Delta$$
, $A_{m-2}$ is an $(S - 2)^{th}$ element in an allocation sequence, and $\Delta$ is determined based on a difference between $Y_{D-1}$ and $N'$, whose value is 0 or 1;
a quantity of information bits in an $(m-1)^{th}$ code sub-

$$J_{m-1} = I - \sum_{i=0}^{m-2} J_i$$

block is                                      ; and

$A_i$ is an element in the allocation sequence, the allocation sequence is a sequence $\{A_0, A_1, A_2,..., A_{S-2}\}$ including $S - 1$ variables, and a relationship between elements in the allocation sequence is $A_0 \leq A_1 \leq ... \leq A_{S-2}$.

In a possible implementation, that the network device receives encoded data may be receiving at least two receiving sub-blocks, where the at least two receiving sub-blocks correspond to at least two code sub-blocks. When the network device decodes the encoded data, if the at least two receiving sub-blocks are before a last receiving sub-block of a last code block (that is, are not the last receiving sub-block of the last code block), and the at least two receiving sub-blocks belong to different code blocks, the network device decodes a first received receiving sub-block, and buffers a later received receiving sub-block; or if the at least two receiving sub-blocks are before a last receiving sub-block of a last code block (that is, are not the last receiving sub-block of the last code block), and the at least two receiving sub-blocks belong to a same code block, the network device decouples and decodes a later received receiving sub-block by using a first received receiving sub-block.

In the method, in a blind decoding process, at least two code sub-blocks need to be buffered, and it is determined whether the two code sub-blocks belong to a last code block and a same code block, to perform decoding in different manners, and ensure logical correctness of blind decoding.

In a possible implementation, if one of the at least two receiving sub-blocks is a last receiving sub-block of a last code block, and the at least two receiving sub-blocks belong to different code blocks, the at least two receiving sub-blocks are separately decoded; or if one of the at least two receiving sub-blocks is a last receiving sub-block of a last code block, and the at least two receiving sub-blocks belong to a same code block, the at least two receiving sub-blocks are jointly decoded.

In the method, a manner that may be used during decoding if a code sub-block in two code sub-blocks is the last code sub-block of the last code block is further described, to ensure logical correctness of blind decoding.

It should be noted that the method in the second aspect may alternatively be performed by the terminal device. In this case, the network device is an encoding side, and the terminal device is a decoding side.

According to a third aspect, an embodiment of this application provides a data processing apparatus. The data processing apparatus may be a terminal device, or may be an apparatus in the terminal device, or may be an apparatus that can be used with the terminal device. In a design, the data processing apparatus may include a one-to-one corresponding module for performing the method/operation/step/action described in any one of the first aspect or the possible implementations of the first aspect. The module may be a hardware circuit, or may be software, or may be implemented by a combination of a hardware circuit and software. In a design, the data processing apparatus may include a processing unit and a communication unit.

For specific descriptions of the method/operation/step/action performed by the terminal device, refer to the corresponding descriptions in any one of the first aspect or the possible implementations of the first aspect. Details are not described herein again. It may be understood that the data processing apparatus can also achieve effects that can be achieved in the first aspect.

According to a fourth aspect, an embodiment of this application provides another data processing apparatus. The data processing apparatus may be a network device, or may be an apparatus in the network device, or may be an apparatus that can be used with the network device. In a design, the data processing apparatus may include a one-to-one corresponding module for performing the method/operation/step/action described in any one of the second aspect or the possible implementations of the second aspect. The module may be a hardware circuit, or may be software, or may be implemented by a combination of a hardware circuit and software. In a design, the data processing apparatus may include a processing unit and a communication unit.

For specific descriptions of the method performed by the network device, refer to the corresponding descriptions in any one of the second aspect or the possible implementations of the second aspect. Details are not described herein again. It may be understood that the data processing apparatus can also achieve effects that can be achieved in the second aspect.

According to a fifth aspect, an embodiment of this application provides a communication apparatus. The communication apparatus includes an input/output interface and a logic circuit. The input/output interface is configured to input or output data. The logic circuit processes the data according to the method in any one of the first aspect or the possible implementations of the first aspect, to obtain processed data.

According to a sixth aspect, an embodiment of this application provides a communication apparatus. The communication apparatus includes an input/output interface and a logic circuit. The input/output interface is configured to input or output data. The logic circuit processes the data according to the method in any one of the second aspect or the possible implementations of the second aspect, to obtain processed data.

According to a seventh aspect, an embodiment of this application provides a terminal device, including a processor, where the processor is coupled to a memory, the memory is configured to store instructions, and when the instructions are executed by the processor, the terminal device is enabled to implement the method in any one of the first aspect or the possible implementations of the first aspect, or the method in any one of the second aspect or the possible implementations of the second aspect.

According to an eighth aspect, an embodiment of this application provides a network device, including a processor, where the processor is coupled to a memory, the memory is configured to store instructions, and when the instructions are executed by the processor, the network device is enabled to implement the method in any one of the first aspect or the possible implementations of the first aspect, or the method in any one of the second aspect or the possible implementations of the second aspect.

According to a ninth aspect, an embodiment of this application further provides a computer-readable storage medium. The computer-readable storage medium stores instructions, and when the instructions are run on a computer, the computer is enabled to perform the method in any one of the first aspect or the possible implementations of the first aspect, or the method in any one of the second aspect or the possible implementations of the second aspect.

According to a tenth aspect, an embodiment of this application provides a chip system. The chip system includes a processor, and may further include a memory, configured to implement the method in any one of the first aspect or the possible implementations of the first aspect, or the method in any one of the second aspect or the possible implementations of the second aspect. The chip system may include a chip, or may include a chip and another discrete component.

According to an eleventh aspect, an embodiment of this application further provides a computer program product, including instructions. When the instructions are run on a computer, the computer is enabled to perform the method in any one of the first aspect or the possible implementations of the first aspect, or the method in any one of the second aspect or the possible implementations of the second aspect.

According to a twelfth aspect, an embodiment of this application provides a communication system. The communication system includes a transmitting end and a receiving end. The transmitting end is configured to implement a function in the method in any one of the first aspect or the possible implementations of the first aspect. The receiving end is configured to implement a function in the method in any one of the second aspect or the possible implementations of the second aspect. Optionally, the communication system may include the data processing apparatuses described in the third aspect and the fourth aspect, or may include the communication apparatuses described in the fifth aspect and the sixth aspect, or may include the devices described in the seventh aspect and the eighth aspect.

**BRIEF DESCRIPTION OF DRAWINGS**

FIG. 1 is a diagram of a communication system according to this application;
FIG. 2 is a diagram of encoding a polar code of $8 \times 8$;
FIG. 3 is a diagram of a relationship between an information bit, a to-be-encoded block, a code block, a code sub-block, and a sending sub-block according to this application;
FIG. 4 is a schematic flowchart of a first data processing method according to this application;
FIG. 5 is a diagram of a sending sub-block according to this application;
FIG. 6 is a diagram of another sending sub-block according to this application;
FIG. 7 is a schematic flowchart of a second data processing method according to this application;
FIG. 8 is a performance analysis diagram of a second data processing method according to this application;
FIG. 9 is a diagram of an apparatus according to this application; and
FIG. 10 is a diagram of a communication device according to this application.

**DESCRIPTION OF EMBODIMENTS**

In this application, "/" may represent an "or" relationship between associated objects. For example, A/B may represent A or B. In addition, "and/or" may indicate that there are three relationships between associated objects. For example, A and/or B may represent the following three cases: Only A exists, both A and B exist, and only B exists, where A and B may be singular or plural. For ease of description of technical solutions of this application, in this application, terms such as "first" and "second" may be used to distinguish between technical features with same or similar functions. The terms such as "first" and "second" do not limit a quantity and an execution sequence, and the terms such as "first" and "second" do not limit a definite difference. In this application, the terms such as "example" or "for example" are used to represent an example, an illustration, or a description. Any embodiment or design scheme described as "example" or "for example" should not be explained as being more preferred or having more advantages than another embodiment or design scheme. The terms such as "example" or "for example" are used to present a related concept in a specific manner for ease of understanding.

The following describes the technical solutions of this application with reference to the accompanying drawings in this application.

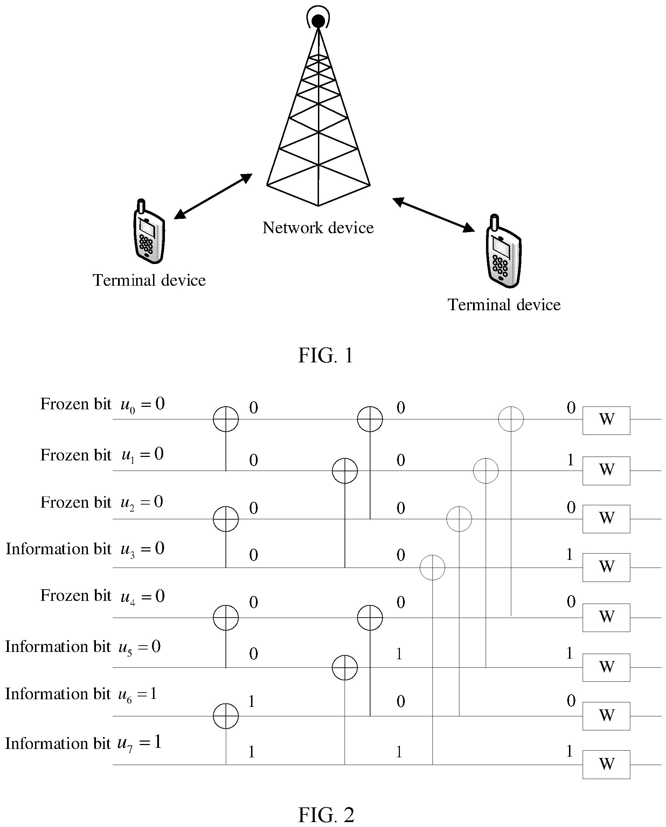

This application provides a data processing method. In the method, a new encoding matrix of a polar code is constructed, and to-be-encoded information bits are processed by using the encoding matrix, to implement stream encoding and/or stream decoding of the polar code. The data processing method may be applied to a communication system, and a system architecture is shown in FIG. 1. The communication system includes a network device and a terminal device, and the network device may provide a communication service for the terminal device.

The communication system mentioned in this application includes but is not limited to: a narrowband-internet of things (narrowband-Internet of things, NB-IoT) system, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronization code division multiple access (time division-synchronization code division multiple access, TD-SCDMA) system, a long term evolution (long term evolution, LTE) system, three application scenarios of a 5G mobile communication system: enhanced mobile broadband (enhanced mobility broad band, eMBB), ultra-reliable and low-latency communications (ultra-reliable and low-latency communications, URLLC), and enhanced machine-type communication (enhanced machine-type communication, eMTC), and a future communication system (such as 6G/7G).

The network device may be a device that can communicate with the terminal device. The network device may be a base station, a relay station, or an access point. The base station may be a base transceiver station (base transceiver station, BTS) in a global system for mobile communications (global system for mobile communications, GSM) or a code division multiple access (code division multiple access, CDMA) network, or may be a 3G base station NodeB in a wideband code division multiple access (wideband code division multiple access, WCDMA) system, or may be an evolved NodeB (eNB or eNodeB for short) in a long term evolution (long term evolution, LTE) system. The network device may alternatively be a satellite in a satellite communication system. The network device may alternatively be a radio controller in a cloud radio access network (cloud radio access network, CRAN) scenario. The network device may alternatively be a network device in a 5G network or a network device (for example, a gNodeB) in a future evolved public land mobile network (public land mobile network, PLMN) network. The network device may alternatively be a wearable device, an uncrewed aerial vehicle, a device in the internet of vehicles (for example, a vehicle to everything (vehicle to everything, V2X) device), a communication device in device to device (device to device, D2D) communication, or a network device used in a future communication system.

The terminal device may be user equipment (user equipment, UE), an access terminal, a terminal unit, a terminal station, a mobile station, a remote station, a remote terminal, a mobile device, a terminal, a wireless communication device, a terminal agent, a terminal apparatus, or the like. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a wearable device, an uncrewed aerial vehicle, a V2X device, a D2D device, a terminal device in the 5G network, a terminal device in the future evolved PLMN network, a terminal device in the future communication system, or the like.

It may be understood that this application is an encoding scheme, and may be used for a dedicated network device or a general-purpose device, may be used for the network device, or may be used for various terminal devices or the like. This application may be implemented by using a dedicated chip (for example, an application-specific integrated circuit (application-specific integrated circuit, ASIC)), or may be implemented by using a programmable chip (for example, a field programmable gate array (field programmable gate array, FPGA)), or may be implemented by using software (program code in a memory). This is not limited in this application.

(1) Related concepts in this application

1. Polar code:

The polar code is a channel encoding scheme that can be strictly proved to reach a channel capacity. The polar code features high performance, low complexity, a flexible matching manner, and the like. Currently, the polar code has been determined as an uplink and/or downlink control channel encoding scheme in a 5th generation mobile communication (5th generation, 5G) control channel enhanced mobile broadband (enhanced mobile broadband, eMBB) scenario.

For example, FIG. 2 is a diagram of encoding a polar code of $8 \times 8$. To-be-encoded bits are sorted based on reliability of the to-be-encoded bits, and are successively arranged at different locations in a to-be-encoded block. Generally, a bit with high reliability is set as an information bit (data), and a bit with low reliability is set as a frozen (frozen) bit. A value of the frozen bit is usually set to 0, and is known to both a transmitting end and a receiving end during actual transmission. As shown in FIG. 2, $u_7, u_6, u_5, u_3$ are four bits with higher reliability and are respectively set as information bits, and $u_4, u_2, u_1, u_0$ are four bits with lower reliability and are respectively set as frozen bits.

The polar code is a linear block code. A generator matrix of the polar code is $G_N$, and an encoding process of the polar code is $x_1^N = u_1^N G_N$. $u_1^N = (u_1, u_2, ..., u_N)$ is a binary row vector, and has a length of $N$ (that is, a code length). $G_N$ is a matrix of

$N \times N$, and $G_N = F_2^{\otimes(\log_2(N))}$ , where

$F_2 = \begin{bmatrix} 1 & 0 \\ 1 & 1 \end{bmatrix}$ , and $F_2^{\otimes(\log_2(N))}$ is defined as a Kronecker (Kronecker) product of $\log_2(N)$ matrices $F_2$.
For example, when $N=4$, $\log_2(N) = \log_2(4) = 2$, and

$$F_2^{\otimes 2} = \begin{bmatrix} 1 & 0 & 0 & 0 \\ 1 & 1 & 0 & 0 \\ 1 & 0 & 1 & 0 \\ 1 & 1 & 1 & 1 \end{bmatrix}$$ ; or 1 1 1 1 when $N=8$,

$\log_2(N) = \log_2(8) = 3$, and

$$F_2^{\otimes 3} = \begin{bmatrix} 1 & 0 & 0 & 0 & 0 & 0 & 0 & 0 \\ 1 & 1 & 0 & 0 & 0 & 0 & 0 & 0 \\ 1 & 0 & 1 & 0 & 0 & 0 & 0 & 0 \\ 1 & 1 & 1 & 1 & 0 & 0 & 0 & 0 \\ 1 & 0 & 0 & 0 & 1 & 0 & 0 & 0 \\ 1 & 1 & 0 & 0 & 1 & 1 & 0 & 0 \\ 1 & 0 & 1 & 0 & 1 & 0 & 1 & 0 \\ 1 & 1 & 1 & 1 & 1 & 1 & 1 & 1 \end{bmatrix}$$ .

Therefore, a standard mother code length of the polar code is $N = 2^n$, where n is a positive integer.

2. Encoding matrix $G$ provided in this application:

The encoding matrix provided in this application

is $G = \begin{bmatrix} G_{N'} & 0 & \dots & 0 \\ 0 & G_{N'} & \dots & 0 \\ \dots & \dots & \ddots & \dots \\ G_{N'} & G_{N'} & \dots & G_{N'} \end{bmatrix}$ , $G$ is a matrix with a

size of $(m \times 2^n) \times (m \times 2^n)$, $m$ and $n$ are positive integers, the matrix $G_{N'}$ is a polar generator matrix with a size of $2^n$

$\times 2^n$, and is represented as $G_{N'} = F_2^{\otimes(\log_2(N'))}$ , and the matrix $O$ is an all-zero matrix with a size of $2^n \times 2^n$.
In other words, if the encoding matrix $G$ is considered as a matrix of $m \times m$, each element in the matrix is a matrix of $2^n \times 2^n$, each element in a diagonal of the matrix is a matrix $G_{N'}$, each element in a bottom edge of the matrix is a matrix $G_{N'}$, and an element other than the elements in the diagonal and the bottom edge is a matrix

$O$.
A mother code length of the encoding matrix $G$ is $N' = m \times 2^n$. It may be understood that when $m=1$ or $m=2$, the encoding matrix $G$ is the same as an encoding matrix of an ordinary polar code. When $m \geq 3$, the en-

coding matrix $G = \begin{bmatrix} G_{N'} & 0 & \dots & 0 \\ 0 & G_{N'} & \dots & 0 \\ \dots & \dots & \ddots & \dots \\ G_{N'} & G_{N'} & \dots & G_{N'} \end{bmatrix}$ .

3. Information bit, to-be-encoded block, code block, code sub-block, sending sub-block, and receiving sub-block:

Information bit: The information bit is a to-be-encoded information bit. For example, it is assumed that there are $K$ information bits.
To-be-encoded block: Information bits are divided, and each group of information bits obtained through division is carried in a to-be-encoded block. A quantity $C$ of to-be-encoded **blocks** is determined based on the quantity $K$ of information bits. For example, the quantity of to-be-encoded blocks is $C = \left\lceil \dfrac{(K/R)}{M} \right\rceil$ , $R$

is a code rate, and $M$ is a maximum mother code length of the to-be-encoded block.
Code block and code sub-block: The code block may be obtained by encoding the to-be-encoded block. A quantity of information bits in the to-be-encoded block is the same as a quantity of information bits in the code block. The code block may be divided to obtain $m$ code sub-blocks, and a length of each code sub-block is determined (for example, a length is $N'$).
Sending sub-block: For an encoding side, the code sub-block is sent via the sending sub-block, and a quantity of sending sub-blocks is determined based on a code length of the code block and a length of the code sub-block. For example, the quantity of sending sub-blocks is $D = \left\lceil \dfrac{X}{N'} \right\rceil$ , $X$ is the code length of the code block, and $N'$ is the length of the code sub-block.
Receiving sub-block: The sending sub-block is transmitted to a decoding side through a channel, and a sub-block received by the decoding side may be referred to as the receiving sub-block. It may be understood that encoded data carried in the sending sub-block and encoded data carried in the receiving sub-block are the same, and the decoding side may decode the receiving sub-block to obtain information bits before encoding. For example, a sent code sub-block in this application may be referred to as a sending sub-block, and a received code sub-block in this application may be referred to as a receiving sub-block.

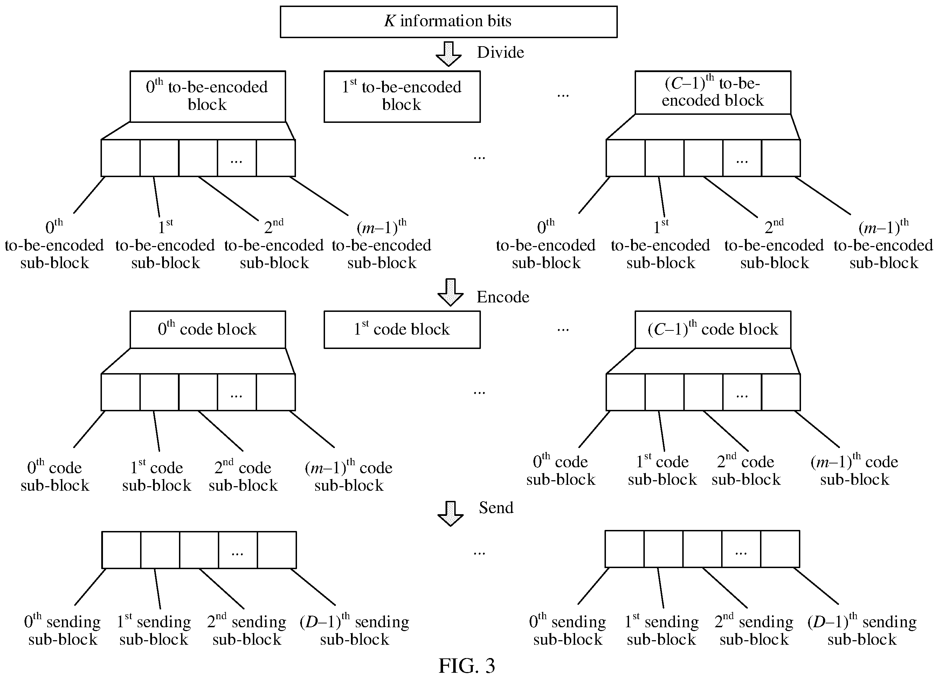

For example, FIG. 3 is a diagram of a relationship between an information bit, a to-be-encoded block, a code block, a code sub-block, and a sending sub-block according to this application. It is assumed that there are $K$ information bits. The $K$ information bits are divided, and each group of information bits obtained through division is carried in one to-be-encoded block. Each to-be-encoded block includes $m$ to-be-encoded sub-blocks. The to-be-encoded block may be encoded to obtain a code block, a quantity of code blocks is the same as a quantity of to-be-encoded blocks, and each code block also includes $m$ code sub-blocks. A plurality of code sub-blocks are separately sent via a sending sub-block, as shown in FIG. 3.

4. Stream decoding:

In a process of receiving encoded data, decoding may be started based on received encoded data, and decoding does not need to be started until all encoded data is received. For example, when the decoding side receives at least two code sub-blocks, because there is no coupling relationship between the code sub-blocks, the decoding side may start decoding based on the two code sub-blocks, and still continue to receive a code sub-block, to implement stream decoding.

5. Blind decoding:

In a stream decoding process, a start symbol and an end symbol are usually used to mark a start and an end of received encoded data. Therefore, before receiving the end symbol, the decoding side does not know an actual code length. Therefore, blind decoding is stream decoding with a higher requirement, system interaction and a control signal are simpler, and channel encoding and decoding have higher design requirements. A convolutional code is a code that can implement blind decoding, but the convolutional code has poor decoding performance when a code length is long.

For example, to implement blind decoding, rate matching (for example, puncturing) needs to be performed on a last sending sub-block based on the foregoing encoding matrix $G$. In addition, because there cannot be too many coupling blocks for coupled polar codes (for example, a quantity of code sub-blocks is limited to $m \leq 1.5/R$), a maximum mother code length needs to be limited. Code blocks (code block, CB) cannot be evenly distributed in a blind decoding process. Therefore, in this application, it is assumed that the maximum mother code length is used for other code blocks than a last code block, and the last code block includes a remaining information bit. However, if the last code block includes an excessively small quantity of information bits, decoding performance is reduced. Therefore, this application further provides a method for adjusting a quantity of information bits between CBs.

6. Rate matching:

Because a last code sub-block in the last code block may not be fully filled (that is, a quantity of information bits in the last code sub-block is small), rate matching needs to be performed on the last code sub-block. For example, when a code rate is low, rate matching is usually performed on a code sub-block in a puncturing (puncture) manner. However, puncturing of the polar code is usually to puncture bits at a $0^{th}$ location to an $(N'-Y-1)^{th}$ location of the code sub-block, where $N'$ is a length of the code sub-block, and $Y$ is a sending length of the code sub-block. After the puncturing manner is used, the bits at the $0^{th}$ location to the $(N'-Y-1)^{th}$ location of the code sub-block are no longer sent. In this case, if bits at an $(N'-Y)^{th}$ location to an $(N'-1)^{th}$ location of the code sub-block are sent, a receiving end fills data at an $(N'-Y)^{th}$ location into a 0 address (because a length of $J'$ is unknown), affecting decoding. Therefore, in this application, it is designed that an order of sending each sending sub-block used to send the code sub-block should be sent in reverse order from the $(N'-1)^{th}$ location to the $(N'-Y)^{th}$ location.

7. F operation:

The F operation is a basic decoding operation of the polar code, and a predefined F function (f-function) is used for processing. Inputs of the F function are $L_0$ and $L_1$, and the F function may be simplified as:
$f(L_0,L_1)=(sig(L_0) \wedge sig(L_1)?-1:1)*(abs(L_0)>abs(L_1)?abs(L_1):abs(L_0))$. sig indicates a sign operation. If an immediate number is greater than 0, a return value is 0. If an immediate number is not greater than 0, a return value is 1. abs indicates an absolute value operation. For example, it is assumed that there is encoded data $x_0$ and $x_{m-1}$ with a length of $N'$, an F operation is performed on $x_0$ and $x_{m-1}$, and signs of $x_0$ and $x_{m-1}$ are compared. If the signs are consistent, a value of the immediate number is 1. If the signs are not consistent, a value of the immediate number is -1.

8. G operation:

The G operation is a basic decoding operation of the polar code, and a predefined G function (g-function) is used for processing. Inputs of the G function are $L_0$, $L_1$, and a feedback value B, and the G function is $g(L_0, L_1,B) = (B == 0)? L_1 + L_0 : L_1 - L_0$.

(2) First data processing method provided in this application

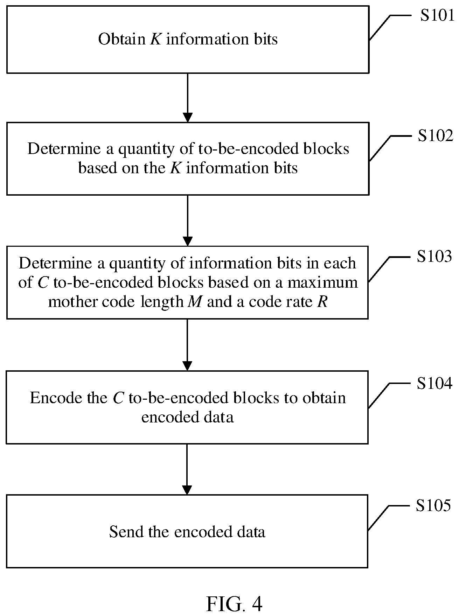

FIG. 4 is a schematic flowchart of a first data processing method according to this application. The data processing method may be performed by a terminal device, or may be performed by a network device, an encoding procedure is mainly performed, and the following steps are included.

S101: Obtain $K$ information bits.

S102: Determine a quantity of to-be-encoded blocks based on the $K$ information bits.

The following two cases of determining the quantity of to-be-encoded blocks based on the quantity $K$ of information bits may be included.

Case 1: When $K$ satisfies $K \leq M \times R + k$, the quantity of to-be-encoded blocks is $C = 1$.

$M$ is a maximum mother code length, and is determined based on a maximum value $S$ of a quantity of to-be-encoded sub-blocks in the to-be-encoded block and a size $N'$ of the to-be-encoded sub-block, $M = N' \times S$, and the maximum mother code length does not include a quantity of all sub-blocks of a repetition code. $k$ is a quantity of adjustment bits, and is used to adjust a quantity of information bits between CBs when a quantity of information bits included in a last to-be-encoded block is excessively small. A value of $k$ may be 2 or 3, or may be a preset value.

For example, when $K$ satisfies $K \leq M \times R + k$, that is, when a quantity of to-be-encoded information bits is less than or equal to a maximum quantity of information bits that can be carried in one to-be-encoded block, only one to-be-encoded block is required to carry the to-be-encoded information bits.

Case 2: When $K$ satisfies $K > M \times R + k$, the quantity of to-be-encoded blocks is $C > 1$.

Quantities of information bits in various to-be-encoded blocks other than a $0^{th}$ to-be-encoded block and a last to-be-encoded block are the same and are all $M \times R$, a quantity of information bits in the last to-be-encoded block is less than or equal to $M \times R$, a quantity of information bits in the $0^{th}$ code block is equal to $M \times R + k$, and $k$ is greater than or equal to 0.

For example, when $K$ satisfies $K > M \times R + k$, that is, when a quantity of to-be-encoded information bits is greater than a maximum quantity of information bits that can be carried in one to-be-encoded block, a plurality of to-be-encoded blocks are required to carry the to-be-encoded information bits.

S103: Determine a quantity of information bits in each of $C$ to-be-encoded blocks based on the maximum mother code length $M$ and a code rate $R$.

S104: Encode the $C$ to-be-encoded blocks to obtain encoded data.

Based on the descriptions in S102, when the quantity of to-be-encoded blocks is $C = 1$, only one to-be-encoded block is required to carry the to-be-encoded information bits, and the quantity of information bits included in the to-be-encoded block is $K$.

When the quantity of to-be-encoded blocks is $C > 1$, the following two cases of the quantity of information bits in each of the $C$ to-be-encoded blocks may be included.

Case 1: If a quantity of information bits in a last to-be-encoded block is $K - M \times R \times (C - 1) > k$, it indicates that the quantity of information bits in the last to-be-encoded block is not excessively small and does not affect decoding performance. In this case, the quantity

$$C = \left\lceil \frac{E}{M} \right\rceil$$

of to-be-encoded blocks is , and $E$ is a total code length corresponding to the $K$ information bits.

For all to-be-encoded block, to-be-encoded blocks other than the last to-be-encoded block are first filled as much as possible, that is, quantities of information bits in various to-be-encoded blocks other than the last to-be-encoded block are the same, and are all $M \times R$ (that is, a maximum value of the quantity of information bits that can be carried in each to-be-encoded block). In this case, the quantity of information bits in the last to-be-encoded block is $K - M \times R \times (C - 1)$.

For example, the quantity of information bits included in each to-be-encoded block is $I_c = M \times R$ and $I_{C-1} = K - M \times R \times (C - 1)$, where $c \in \{0,1,2,...,C - 2\}$. It may be understood that, a quantity of corresponding code blocks after each to-be-encoded block is encoded is

$$C = \left\lceil \frac{E}{M} \right\rceil$$

also , and a code length of each code block is $X_c = M$ and $X_{C-1} = E - M \times (C - 1)$.

Case 2: If a quantity of information bits in the last to-be-encoded block is $K - M \times R \times (C - 1) < k$, it indicates that the quantity of information bits in the last to-be-encoded block is excessively small and may affect decoding performance. In this case, the quantity of information bits in each to-be-encoded block needs to be adjusted, and finally the quantity of to-be-encoded blocks is adjusted.

For example, if each to-be-encoded block needs to be moved forward by $k$ information bits, a quantity of information bits included in a moved to-be-encoded block is $I_0 = M \times R + k$, $I_c = M \times R$, where $c \in \{1,2,...,C - 2\}$, and $I_{C-1} = K - M \times R \times (C - 1) - k$, and an adjusted quantity of to-be-encoded blocks is

$$C = \left\lceil \frac{K - (M \times R + k)}{M \times R} \right\rceil + 1$$

. In this case, the quantity of to-be-encoded blocks is reduced by one compared with the quantity of to-be-encoded blocks before the adjustment.

It may be understood that, moving each to-be-encoded block forward by the $k$ information bits is equivalent to successively superimposing a few information bits forward included in the last to-be-encoded block. In this case, the original last to-be-encoded block no longer includes an information bit, and the quantity of to-be-encoded blocks is reduced by 1. Successively moving a to-be-encoded block other than the $0^{th}$ to-be-encoded block forward by the $k$ information bits is equivalent to describing that the quantity of information bits included in the to-be-encoded block is still unchanged, and is still $M$

$\times$ *R*. The *k* information bits are added to the 0th to-be-encoded block. In this case, a sending length of the code block is greater than the maximum mother code length.

In a possible implementation, the encoded data includes the *C* code blocks, each code block includes *m* code sub-blocks, and a code sub-block is sent via a sending sub-block;

For example, it is assumed that each code block has a maximum of *S* code sub-blocks, and a size of each code sub-block is *N'*. It is assumed that the code length of the code block is *X*, and a quantity of sending sub-blocks

$$D = \left\lceil \frac{X}{N'} \right\rceil$$

for the code block is _____ . When the quantity of sending sub-blocks for the code block satisfies $D > S$, the quantity of code sub-blocks in the code block satisfies $m = S$; or when the quantity of sending sub-blocks for the code block satisfies $D \leq S$, the quantity of code sub-blocks in the code block satisfies $m = D$. In other words, when $D > S$, a last code sub-block is a repetition sub-block, and the quantity of sending sub-blocks is greater than the quantity of code sub-blocks; or when $D \leq S$, the quantity of code sub-blocks is the same as the quantity of sending sub-blocks, and there is no repetition sub-block.

Case 1: When $D > S$, the last code sub-block in the code block is a repetition sub-block, a 0th sending sub-block to an $(m-1)$th sending sub-block are the *m* code sub-blocks, and an *m*th sending sub-block is obtained by performing repetition based on an $(m-1)$th code sub-block.

In this case, a length of the sending sub-block for the code block is: $Y_j = N'$, where *j* satisfies $j \in \{0,1,2,..., D-2\}$, and $Y_{D-1} = X - M$. A length of the code sub-block for the code block is: $Y_i = N'$, where *i* satisfies $i \in \{0,1,2,..., m-2\}$, and $Y_{S-1} = X - (m-1) \times N'$. A quantity of information bits in the code sub-block in the code block is $J_i = A_i$, where $i \in \{0,1,2,...,m-3, m-2\}$, and a quantity of information bits in

$$J_{m-1} = I - \sum_{i=0}^{m-2} J_i$$

the $(m-1)$th code sub-block is _____ .

$A_i$ is an element in an allocation sequence. When the code rate is *R*, it is assumed that there is an allocation sequence for an information quantity. The allocation sequence includes *S*-1 variables, and is represented as $\{A_0, A_1, A_2,..., A_{S-2}\}$, where a relationship between elements in the allocation sequence is $A_0 \leq A_1 \leq ... \leq A_{S-2}$. For example, when the code rate is $R = 1/8$, assuming that the quantity of information bits is $K = 64$, the allocation sequence includes four variables, and is represented as $\{A_0, A_1, A_2, A_3\}$, where $A_0 = 1$, $A_1 = 4$, $A_2 = 5$, and $A_3 = 64 - (1 + 4 + 5) = 54$.

Case 2: When $D \leq S$, there is no repetition sub-block. If a penultimate code sub-block in the code block is a puncturing sub-block, an $(m-1)$th sending sub-block is obtained by performing puncturing based on the penultimate code sub-block, and remaining *m*-1 sending sub-blocks are remaining *m*-1 code sub-blocks.

In this case, a length of the sending sub-block for the code block is: $Y_j = N'$, where *j* satisfies $j \in \{0,1,2,..., D-2\}$, and $Y_{D-1} = X - (D-1) * N'$. A length of the code sub-block for the code block is: $Y_i = N'$, where i satisfies $i \in \{0,1,2,..., m-2\}$, and $Y_{S-1} = X - (m-1) \times N'$. A quantity of information bits in the code sub-block in the code block is $J_i = A_i$, where $i \in \{0,1,2,...,m-3\}$, a quantity of information bits in an $(m-2)$th code sub-block is

$$J_{m-2} = \frac{A_{m-2} \times Y_{D-1}}{N'} - \Delta$$

, and a quantity of information bits in an $(m-1)$th code sub-block is

$$J_{m-1} = I - \sum_{i=0}^{m-2} J_i$$

, where $A_{m-2}$ is an $(S-2)$th element in an allocation sequence, and $\Delta$ is determined based on a difference between $Y_{D-1}$ and *N'*, whose value is 0 or 1.

In a possible implementation, the encoding the *C* to-be-encoded blocks to obtain encoded data specifically includes the following steps:

dividing to-be-encoded information bits into *C* segments based on a quantity of information bits in each code block;
dividing each segment of to-be-encoded bits into *m* sub-segments based on a quantity of information bits in each code sub-block;
determining an information bit and a frozen bit of each code sub-block based on a code length of each code sub-block and the quantity of information bits in each code sub-block, and constructing an information sequence with a size of $m \times 2^n$ based on the quantity m of code sub-blocks; and
inserting the to-be-encoded information bits into a to-be-encoded sequence based on location information of information bits in the information sequence, and performing modulo two multiplication processing on the to-be-encoded sequence and an encoding matrix *G* to obtain the encoded data.

For descriptions of the encoding matrix *G*, refer to the foregoing definition. Details are not described herein again.

For example, for a code sub-block in any code block, a frozen location of *N'* is determined based on a length of the code sub-block, and an information bit is constructed based on a sequence with a size of *N'*. Selection of the frozen bit may be specified in an existing protocol, or may be designed separately. This is not limited in this application. The information sequence $u^N = \{u_0, u_1, u_2,..., u_{N-1}\}$ with the size of $m \times 2^n$ may be constructed based on the information bit and the frozen bit of each code sub-block and the quantity *m* of code sub-blocks, and modulo two multiplication is performed on the information sequence $u^N$ and the encoding matrix *G* to

$$x^N = u^N \times \begin{bmatrix} G_{N'} & 0 & \dots & 0 \\ 0 & G_{N'} & \dots & 0 \\ \dots & \dots & \ddots & \dots \\ G_{N'} & G_{N'} & \dots & G_{N'} \end{bmatrix}$$

obtain

It should be noted that the to-be-encoded bits in this application may further include a cyclic redundancy check (cyclic redundancy check, CRC) bit and/or a parity check (parity check, PC) bit, and may further involve an operation such as scrambling some bits. Because this is not related to the essence of the solution in this application, the to-be-encoded bits are used for unified description. Details are not described herein.

S105: Send the encoded data.

The encoded data is sent via the sending sub-block. Specifically, an order of sending the sending sub-blocks is: first sending a $(D\text{-}1)^{th}$ sending sub-block, and then successively sending a $j^{th}$ sending sub-block, where $j \in \{0,1,2,...,D\text{-}2\}$. Further, an order of sending bits in the sending sub-block is: sending the bits in reverse order based on the length of the sending sub-block starting from an $(N'\text{-}1)^{th}$ location of the sending sub-block. It should be noted that, when the encoded data is sent, rate matching may be further performed, to ensure that blind decoding can be performed after a decoding side receives the encoded data.

For example, $m$ code sub-blocks in any code block may be sent via $D$ sending sub-blocks. An order of sending the code sub-blocks is that a last code sub-block is first sent (a sequence number is m-1), and then a $0^{th}$ code sub-block and a $1^{st}$ code sub-block are successively sent until the $D$ sending sub-blocks ($m$ code sub-blocks) are sent. It should be noted that, because the order of sending the code sub-blocks is designed in this application, for ease of description, the following uses the sending sub-block as an example for description. Specifically, the following two cases are included.

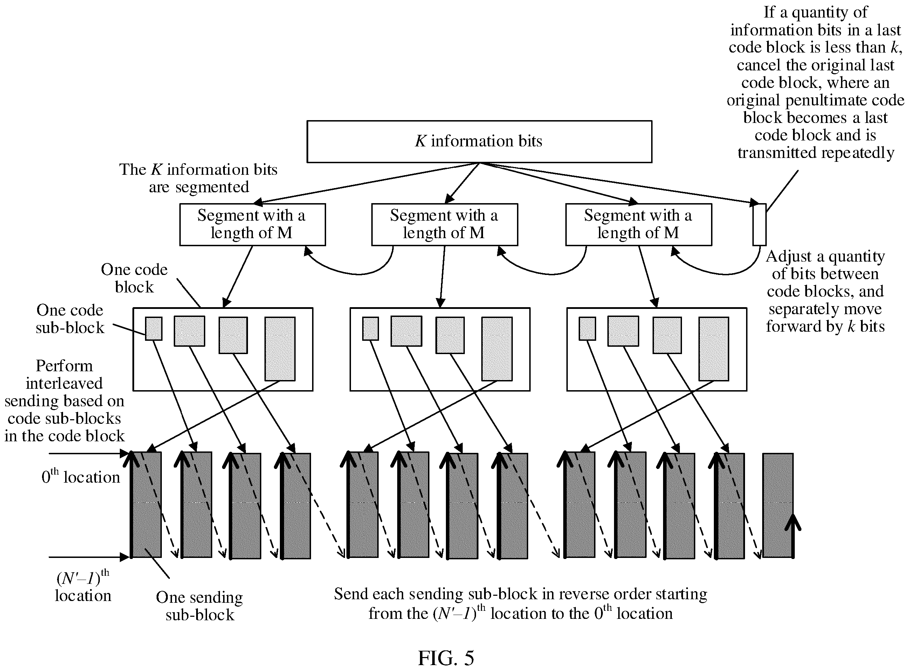

Case 1: When the quantity of sending sub-blocks for the code block satisfies $D > S$, it indicates that a repetition (repetition) mode is used for the sending sub-block. For example, FIG. 5 is a diagram of a sending sub-block according to this application. In the figure, it is assumed that a last sending sub-block is a repetition sub-block. In this case, sending starts from a previous sending sub-block (a sequence number of the sending sub-block is $S\text{-}1$) of the repetition sub-block, and then a $0^{th}$ sending sub-block and a $1^{st}$ sending sub-block are successively sent until an $(S\text{-}2)^{th}$ sending sub-block is sent. After $S$ sending sub-blocks are sent, a code sub-block with a sequence number of $S\text{-}1$ is repeated, and the repetition sub-block is sent, as shown in FIG. 5.

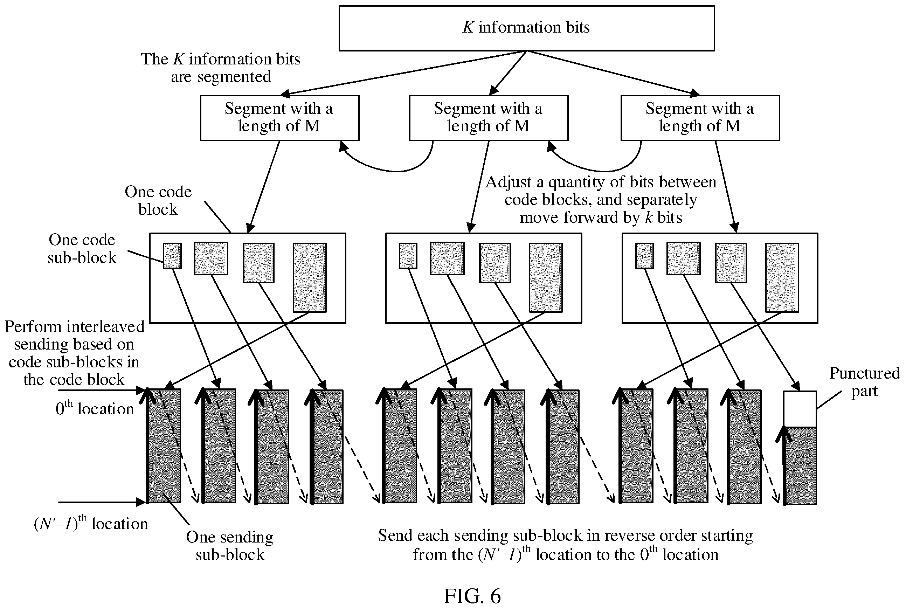

Case 2: When the quantity of sending sub-blocks for the code block satisfies $D \leq S$, it indicates that a puncturing (puncture) mode is used for the sending sub-block. For example, FIG. 6 is a diagram of another sending sub-block according to this application. In the figure, it is assumed that a last sending sub-block is punctured. In this case, the last sending sub-block is still sent first (a sequence number is $D\text{-}1$), then a $0^{th}$ sending sub-block and a $1^{st}$ sending sub-block are successively sent, and sending ends at a $(D\text{-}2)^{th}$ sub-block, as shown in FIG. 6.

For another example, for bits in the sending sub-block, each sending sub-block is sent starting from a bit at an $(N'\text{-}1)^{th}$ location to a bit at a $0^{th}$ location or until counting of the code block ends, as shown in FIG. 5 or FIG. 6. For example, it is assumed that the sending sub-block includes 128 bits. When the sending sub-block is sent, a bit at a $127^{th}$ location is first sent, then a bit at a $126^{th}$ location is sent, and so on, until a bit at a $0^{th}$ location is sent.

It can be learned that, in the data processing method provided in this application, when a quantity of information bits is large, the information bits need to be carried in a plurality of to-be-encoded blocks. In this case, during to-be-encoded block division (that is, code block division), a part of information bits in a subsequent code block may be moved to a previous code block, so that a sudden performance change caused by an excessively small subsequent code block during code block switching can be avoided. In addition, this encoding scheme is used to facilitate blind decoding.

(3) Second data processing method provided in this application

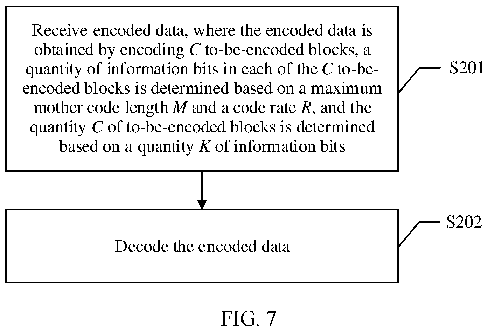

FIG. 7 is a schematic flowchart of a second data processing method according to this application. The data processing method may be performed by a terminal device, or may be performed by a network device, a decoding procedure is mainly performed, and the following steps are included.

S201: Receive encoded data, where the encoded data is obtained by encoding $C$ to-be-encoded blocks, a quantity of information bits in each of the $C$ to-be-encoded blocks is determined based on a maximum mother code length $M$ and a code rate $R$, and the quantity $C$ of to-be-encoded blocks is determined based on a quantity $K$ of information bits.

For descriptions of the encoded data, the to-be-encoded block, a code block, and the like, refer to the corresponding descriptions in the foregoing second part. Details are not described herein again. It may be understood that the encoded data generated in the second part and a sending order used for the encoded data facilitate blind decoding.

It should be noted that, because an order of (an order of receiving) sending code sub-blocks is designed in this application, for a decoding side, a plurality of receiving sub-blocks may be received. For example, receiving the encoded data may be receiving at least two receiving sub-blocks, where the at least two receiving sub-blocks correspond to at least two code sub-blocks.

S202: Decode the encoded data.

To implement blind decoding, the decoding side needs to receive the at least two code sub-blocks (receiving sub-blocks) for decoding. In this case, S202 may include:

> s11: Receive and buffer the at least two code sub-blocks.
> s12: Determine whether the at least two buffered code sub-blocks belong to a same code block.
> s13a: If the at least two buffered code sub-blocks belong to different code blocks, decode a first received code sub-block.
> s13b: If the at least two buffered code sub-blocks belong to the same code block, decouple and decode a first received code sub-block by using a later received code sub-block.
> s14: When a last code sub-block is received, decode a code sub-block that is buffered but not decoded.

For example, when two initial code sub-blocks are received, or starting from a $3^{rd}$ code sub-block, decoding is performed once each time receiving of one code sub-block is completed. In a decoding process, whether the two to-be-decoded code sub-blocks belong to the same code block needs to be determined. Further, whether the two to-be-decoded code sub-blocks belong to a last code block further needs to be determined.

It should be noted that, because the order of (the order of receiving) sending the code sub-blocks is designed in this application, for ease of description, the following uses the receiving sub-block as an example for description. Blind decoding includes the following several cases.

Case 1: If the at least two receiving sub-blocks are before a last receiving sub-block of a last code block, and the at least two receiving sub-blocks belong to different code blocks, decode a first received receiving sub-block, and buffer a later received receiving sub-block.

For example, assuming that the first received receiving sub-block is a last receiving sub-block of a $0^{th}$ code block, and the later received receiving sub-block is a $0^{th}$ receiving sub-block of a $1^{st}$ code block, the last receiving sub-block of the $0^{th}$ code block is decoded, to learn that decoded data is decoded data $\widetilde{x}_{m-1}^{N'}$ of the $0^{th}$ code block. In addition, the $0^{th}$ receiving sub-block of the $1^{st}$ code block is buffered.

It should be noted that the $0^{th}$ receiving sub-block of the $1^{st}$ code block described in the case 1 is actually an $(m-1)^{th}$ code sub-block in the $1^{st}$ code block. Therefore, the $0^{th}$ receiving sub-block is decoded at the end of the $1^{st}$ code block. In addition, when the $0^{th}$ receiving sub-block of the $1^{st}$ code block is decoded, the receiving sub-block is already a sub-block after D-1 times of combination and enhancement.

Case 2: If the at least two receiving sub-blocks are before a last receiving sub-block of a last code block, and the at least two receiving sub-blocks belong to a same code block, decouple and decode a later received receiving sub-block by using a first received receiving sub-block.

For example, assuming that the first received receiving sub-block is a $0^{th}$ receiving sub-block of a $1^{st}$ code block, and the later received receiving sub-block is a $1^{st}$ receiving sub-block of the $1^{st}$ code block, the $1^{st}$ receiving sub-block is decoupled by using the $0^{th}$ receiving sub-block, and a decoupling result is decoded, where a decoding result is decoded data $\widetilde{x}_1^{N'}$ of the $1^{st}$ code block. Then, a soft value of the $0^{th}$ receiving sub-block is enhanced by using $\widetilde{x}_1^{N'}$ and a soft value of the $1^{st}$ receiving sub-block.

Case 3: If one of the at least two receiving sub-blocks is a last receiving sub-block of a last code block, and the at least two receiving sub-blocks belong to different code blocks, separately decode the two receiving sub-blocks.

For example, assuming that a first received receiving sub-block is a last receiving sub-block of a penultimate code block, and a later received receiving sub-block is a last receiving sub-block of a last code block, the two receiving sub-blocks are separately decoded. For a specific decoding scheme, refer to an existing polar code decoding scheme (for example, processing is performed by using an F operation and/or a G operation). This is not limited in this application.

Case 4: If one of the at least two receiving sub-blocks is a last receiving sub-block of a last code block, and the at least two receiving sub-blocks belong to a same code block, jointly decoding the at least two receiving sub-blocks.

For example, when $D > S$, jointly decoding the at least two receiving sub-blocks may be performing combined decoding on the at least two receiving sub-blocks. For a specific implementation, refer to an existing polar code combined decoding manner. This is not limited in this application.

For another example, when $D \leq S$, the jointly decoding the at least two receiving sub-blocks includes:

> decoupling and decoding a later received receiving sub-block by using a first received receiving sub-block; and
> decoding the later received receiving sub-block.

For a specific implementation, refer to descriptions of decoupling and decoding the later received receiving sub-block by using the first received receiving sub-block in the case 2, and refer to descriptions of decoding the later received receiving sub-block in the existing polar code decoding scheme. This is not limited in this application.

It can be learned that in the data processing method provided in this application, because the encoded data includes a plurality of code blocks, and quantities of information bits in the plurality of code blocks are designed according to a specific rule. In this case, blind decoding can be implemented for the encoded data.

(4) Performance analysis of a data processing method provided in this application applied to a blind decoding scenario

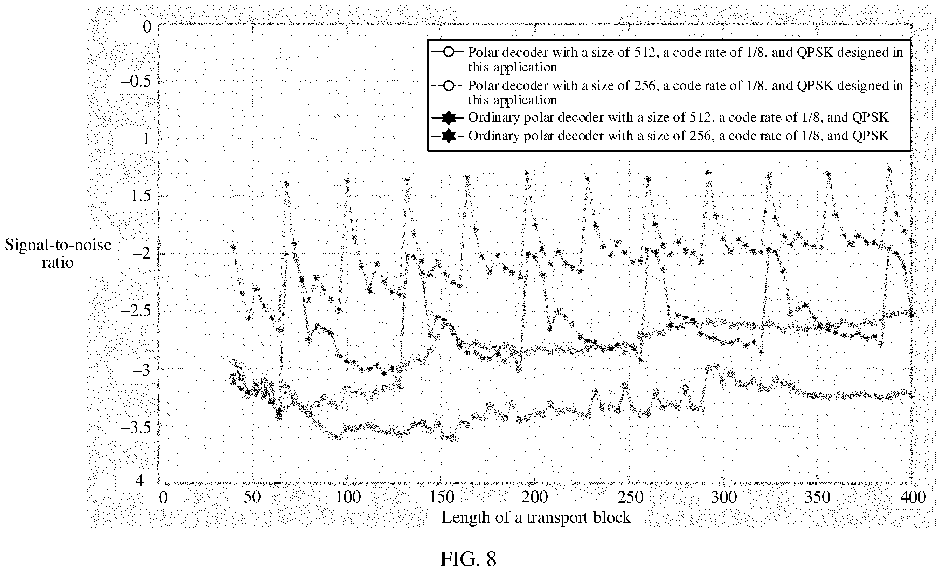

FIG. 8 is a performance analysis diagram of a second data processing method according to this application. The performance analysis diagram is a diagram of decoding performance obtained by using a simulation decoder with a QPSK modulation scheme and a code rate of $R$ = 1/8. In the performance analysis diagram, a horizontal coordinate is a length of each transport block (transport block, TB), a vertical coordinate is EsN0 required by each code when a block error rate (block error rate, BLER) reaches 0.01, and EsN0 indicates a ratio of energy of each symbol to a noise power spectral density (the vertical coordinate may also be considered as a signal-to-noise ratio). The transport block is a set of code blocks.

A solid line and a dashed line form a group, and may be used to distinguish decoding performance when decoders with different sizes and different decoding schemes are used for a same code rate and modulation scheme.

First group: A solid line with a circular symbol and a solid line with an asterisk are decoding performance comparison of a first group. It is assumed that a same decoder size of 512 is used, and a decoding scheme is existing polar code decoding or blind decoding provided in this application. For example, the solid line with the circular symbol indicates decoding performance when the decoder size is 512 and the blind decoding scheme provided in this application is used; and the solid line with the asterisk indicates decoding performance when the decoder size is 512 and the existing polar code decoding is used. It can be learned from comparison of the first group that, when the blind decoding scheme provided in this application is used, there is no sudden performance change (for example, a linear shape is smooth, and there is no large protrusion); and in a case of a same TB length, a signal-to-noise ratio is lower when the blind decoding scheme provided in this application is used.

Second group: A dashed line with a circular symbol and a dashed line with an asterisk are decoding performance comparison of a second group. It is assumed that a same decoder size of 256 is used, and a decoding scheme is existing polar code decoding or blind decoding provided in this application. For example, the dashed line with the circular symbol indicates decoding performance when the decoder size is 256 and the blind decoding scheme provided in this application is used; and the dashed line with the asterisk indicates decoding performance when the decoder size is 256 and the existing polar code decoding is used. It can be learned from comparison of the first group that, when the blind decoding scheme provided in this application is used, there is no sudden performance change (for example, a linear shape is smooth, and there is no large protrusion); and in a case of a same TB length, a signal-to-noise ratio is lower when the blind decoding scheme provided in this application is used.

Third group: A dashed line with a circular symbol and a solid line with an asterisk are decoding performance comparison of a third group. For example, the dashed line with the circular symbol indicates decoding performance when the decoder size is 256 and the blind decoding scheme provided in this application is used; and the solid line with the asterisk indicates decoding performance when the decoder size is 512 and the existing polar code decoding is used. It can be learned from comparison of the third group that, when the blind decoding scheme provided in this application is used, there is no sudden performance change (for example, a linear shape is smooth, and there is no large protrusion); and after a sudden performance change area is excluded (for example, a protrusion part is removed), two lines are very close (that is, performance of the two decoding schemes is close), but a decoder using the blind decoding scheme provided in this application is smaller (the decoder size is 256), so that decoding power consumption is greatly reduced.

To implement the functions in the methods provided in this application, the apparatus or the device provided in this application may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions. Division into modules in this application is an example, and is merely logical function division. During actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

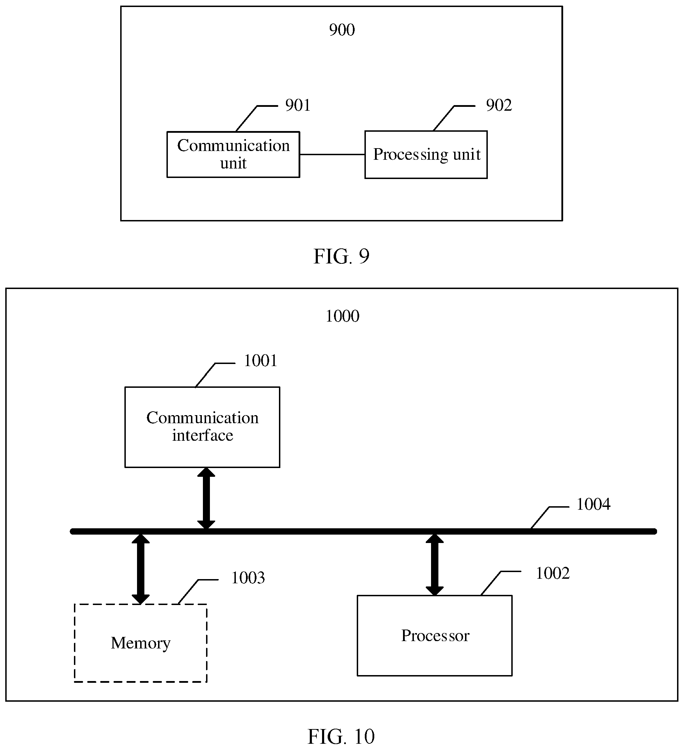

FIG. 9 is a diagram of an apparatus according to this application. The apparatus may include a one-to-one corresponding module for performing the methods/operations/steps/actions described in the method embodiments corresponding to FIG. 4 to FIG. 7. The module may be a hardware circuit, or may be software, or may be implemented by a combination of a hardware circuit and software. For example, the apparatus may be referred to as a data processing apparatus, or may be referred to as a communication apparatus.

The apparatus includes a communication unit 901 and a processing unit 902, configured to implement the method performed by the terminal device or the network device in the foregoing embodiments.

In a possible implementation, the communication unit 901 is configured to obtain $K$ information bits; the processing unit 902 is configured to determine a quantity of to-be-encoded blocks based on the $K$ information bits; determine a quantity of information bits in each of $C$ to-be-encoded blocks based on a maximum mother code length $M$ and a code rate $R$; and encode the $C$ to-be-encoded blocks to obtain encoded data; and the communication unit 901 is configured to send the encoded data. When $K$ is less than or equal to $M \times R + k$, the quantity of to-be-encoded blocks is $C = 1$; or when $K$ is greater than $M \times R + k$, the quantity of to-be-encoded blocks is $C > 1$, where quantities of information bits in various to-be-encoded blocks other than a $0^{th}$ to-be-encoded block and a last to-be-encoded block are the same and are all $M \times R$, a quantity of information bits in the last to-be-encoded block is less than or equal to $M \times R$, a quantity of information bits in the $0^{th}$ code block is equal to $M \times R + k$, and $k$ is greater than or equal to 0.

Optionally, when $C > 1$,

$$C = \left\lceil \frac{K - (M \times R + k)}{M \times R} \right\rceil + 1$$

, where

quantities of information bits included in the $C$ to-be-encoded blocks are: $I_0 = M \times R + k$, $I_c = M \times R$, where $c$ satisfies $c \in \{1,2,...,C - 2\}$, and $I_{C-1} = K - M \times R \times (C - 1) - k$; and
the encoded data includes $C$ code blocks, code lengths of the $C$ code blocks are: $X_{c'} = M$, where $c'$ satisfies $c' \in \{0,1,2,...,C - 2\}$, and $X_{C-1} = E - M \times (C - 1)$, where $E$ is a total code length corresponding to the $K$ information bits.

Optionally, the encoded data includes the $C$ code blocks, each code block includes $m$ code sub-blocks, and a code sub-block is sent via a sending sub-block;

when a code length of a code block is $X$, a quantity of sending sub-blocks for the code block is

$$D = \left\lceil \frac{X}{N'} \right\rceil$$

; and

when the quantity of sending sub-blocks for the code block satisfies $D > S$, a quantity of code sub-blocks in the code block satisfies $m = S$; or
when the quantity of sending sub-blocks for the code block satisfies $D \leq S$, a quantity of code sub-blocks in the code block satisfies $m = D$, where
$N'$ is a code sub-block size; and
$S$ is a maximum value of the quantity of code sub-blocks included in the code block.

Optionally, if a last code sub-block in the code block is a repetition sub-block, a $0^{th}$ sending sub-block to an $(m\text{-}1)^{th}$ sending sub-block are the $m$ code sub-blocks, and an $m^{th}$ sending sub-block is obtained by performing repetition based on an $(m\text{-}1)^{th}$ code sub-block.

Optionally, if a penultimate code sub-block in the code block is a puncturing sub-block, an $(m\text{-}1)^{th}$ sending sub-block is obtained by performing puncturing based on the penultimate code sub-block, and remaining $m\text{-}1$ sending sub-blocks are remaining $m\text{-}1$ code sub-blocks.

Optionally, a length of the sending sub-block for the code block is: $Y_j = N'$, where $j$ satisfies $j \in \{0,1,2,..., D\text{-}2\}$, and $Y_{D-1} = X - (D - 1) * N'$.

Optionally, a quantity of information bits in the code sub-block in the code block is $J_i = A_i$, and $i \in \{0,1,2,..., m - 3\}$, where

when the quantity of code sub-blocks in the code block satisfies $D > S$, $J_{m-2} = A_{m-2}$; or
when the quantity of code sub-blocks in the code block satisfies $D \leq S$, a quantity of information bits in an $(m\text{-}2)^{th}$ code sub-block is

$$J_{m-2} = \frac{A_{m-2} \times Y_{D-1}}{N'} - \Delta$$

, $A_{m-2}$ is an $(S - 2)^{th}$ element in an allocation sequence, and $\Delta$ is determined based on a difference between $Y_{D-1}$ and $N'$, whose value is 0 or 1;
a quantity of information bits in an $(m\text{-}1)^{th}$ code sub-block is

$$J_{m-1} = I - \sum_{i=0}^{m-2} J_i$$

; and

$A_i$ is an element in the allocation sequence, the allocation sequence is a sequence $\{A_0, A_1, A_2,..., A_{S-2}\}$ including $S - 1$ variables, and a relationship between elements in the allocation sequence is $A_0 \leq A_1 \leq ... \leq A_{S-2}$.

Optionally, that the processing unit 902 is configured to encode the $C$ to-be-encoded blocks to obtain encoded data includes:

dividing to-be-encoded information bits into $C$ segments based on a quantity of information bits in each code block;
dividing each segment of to-be-encoded bits into $m$ sub-segments based on a quantity of information bits in each code sub-block;
determining an information bit and a frozen bit of each code sub-block based on a code length of each code sub-block and the quantity of information bits in each code sub-block, and constructing an information sequence with a size of $m \times 2^n$ based on the quantity m of code sub-blocks; and
inserting the to-be-encoded information bits into a to-be-encoded sequence based on location information of information bits in the information sequence, and performing modulo two multiplication processing on the to-be-encoded sequence and an encoding matrix $G$ to obtain the encoded data, where the encoding matrix

$$G = \begin{bmatrix} G_{N'} & 0 & \dots & 0 \\ 0 & G_{N'} & \dots & 0 \\ \dots & \dots & \ddots & \dots \\ G_{N'} & G_{N'} & \dots & G_{N'} \end{bmatrix}$$

, $G$ is a matrix with a size of $(m \times 2^n) \times (m \times 2^n)$, $m$ and $n$ are positive integers,

the matrix $G_{N'}$ is a polar generator matrix with a size of $2^n \times 2^n$, and

the matrix $O$ is an all-zero matrix with a size of $2^n \times 2^n$.

Optionally, an order of sending the code sub-blocks is:

first sending the $(m-1)^{th}$ code sub-block, and then successively sending an $i^{th}$ code sub-block, where an arrangement order of $i$ is $0,1,2,\dots,m-2$.

Optionally, an order of sending encoded bits in the sending sub-block is:

sending the encoded bits in reverse order based on the length of the sending sub-block starting from an $(N'-1)^{th}$ location of the sending sub-block.

For specific execution procedures of the communication unit 901 and the processing unit 902 in this implementation, refer to the descriptions in the method embodiments corresponding to FIG. 4 to FIG. 7. Details are not described herein again. According to the data processing method implemented by the communication apparatus, blind decoding can be implemented. When a quantity of information bits is large, the information bits need to be carried in a plurality of to-be-encoded blocks. In this case, during to-be-encoded block division (that is, code block division), a part of information bits in a subsequent code block are moved to a previous code block, so that a sudden performance change caused by an excessively small subsequent code block during code block switching can be avoided.

In another possible implementation, the communication unit 901 is configured to receive encoded data, and the processing unit 902 is configured to decode the encoded data. The encoded data is obtained by encoding $C$ to-be-encoded blocks, a quantity of information bits in each of the $C$ to-be-encoded blocks is determined based on a maximum mother code length $M$ and a code rate $R$, the quantity $C$ of to-be-encoded blocks is determined based on a quantity $K$ of information bits. When $K$ is less than or equal to $M \times R + k$, the quantity of to-be-encoded blocks is $C = 1$; or when $K$ is greater than $M \times R + k$, the quantity of to-be-encoded blocks is $C > 1$, where quantities of information bits in various to-be-encoded blocks other than a $0^{th}$ to-be-encoded block and a last to-be-encoded block are the same and are all $M \times R$, a quantity of information bits in the last to-be-encoded block is less than or equal to $M \times R$, a quantity of information bits in the $0^{th}$ code block is equal to $M \times R + k$, and $k$ is greater than or equal to 0.

Optionally, when the quantity of to-be-encoded blocks is $C > 1$,

$$C = \left\lceil \frac{K - (M \times R + k)}{M \times R} \right\rceil + 1$$

, where

quantities of information bits included in the $C$ to-be-encoded blocks are: $I_0 = M \times R + k$, $I_c = M \times R$, where $c$ satisfies $c \in \{1,2,\dots,C-2\}$, and $I_{C-1} = K - M \times R \times (C - 1) - k$; and

the encoded data includes $C$ code blocks, code lengths of the $C$ code blocks are: $X_{c'} = M$, where $c'$ satisfies $c' \in \{0,1,2,\dots,C-2\}$, and $X_{C-1} = E - M \times (C - 1)$.

Optionally, the encoded data includes the $C$ code blocks, each code block includes $m$ code sub-blocks, and a code sub-block is sent via a sending sub-block;

when a code length of a code block is $X$, a quantity of sending sub-blocks for the code block satisfies

$$D = \left\lceil \frac{X}{N'} \right\rceil$$

; and

when the quantity of sending sub-blocks for the code block satisfies $D > S$, a quantity of code sub-blocks in the code block satisfies $m = S$; or

when the quantity of sending sub-blocks for the code block satisfies $D \leq S$, a quantity of code sub-blocks in the code block satisfies $m = D$, where

$N'$ is a code sub-block size; and

$S$ is a maximum value of the quantity of code sub-blocks included in the code block.

Optionally, if a last code sub-block in the code block is a repetition sub-block, a $0^{th}$ sending sub-block to an $(m-1)^{th}$ sending sub-block are the $m$ code sub-blocks, and an $m^{th}$ sending sub-block is obtained by performing repetition based on an $(m-1)^{th}$ code sub-block.

Optionally, if a penultimate code sub-block in the code block is a puncturing sub-block, an $(m-1)^{th}$ sending sub-block is obtained by performing puncturing based on the penultimate code sub-block, and remaining $m-1$ sending sub-blocks are remaining $m-1$ code sub-blocks.

Optionally, a length of the sending sub-block for the code block is: $Y_j = N'$, where $j$ satisfies $j \in \{0,1,2,\dots,D-2\}$, and $Y_{D-1} = X - (D - 1) * N'$.

Optionally, a quantity of information bits in the code sub-block in the code block is $J_i = A_i$, and $i \in \{0,1,2,\dots,m-3\}$, where

when the quantity of code sub-blocks in the code block satisfies $D > S$, $J_{m-2} = A_{m-2}$; or

when the quantity of code sub-blocks in the code block satisfies $D \le S$, a quantity of information bits in an $(m - 2)^{th}$ code sub-block is

$$J_{m-2} = \frac{A_{m-2} \times Y_{D-1}}{N'} - \Delta$$

, $A_{m-2}$ is an $(S - 2)^{th}$ element in an allocation sequence, and $\Delta$ is determined based on a difference between $Y_{D-1}$ and $N'$, whose value is 0 or 1;

a quantity of information bits in an $(m-1)^{th}$ code sub-block is

$$J_{m-1} = I - \sum_{i=0}^{m-2} J_i$$

; and

$A_i$ is an element in the allocation sequence, the allocation sequence is a sequence $\{A_0, A_1, A_2, ..., A_{S-2}\}$ including $S - 1$ variables, and a relationship between elements in the allocation sequence is $A_0 \le A_1 \le ... \le A_{S-2}$.

Optionally, that the communication unit 901 receives encoded data includes:

receiving at least two receiving sub-blocks, where the at least two receiving sub-blocks correspond to at least two code sub-blocks; and
that the processing unit 902 is configured to decode the encoded data includes:

if the at least two receiving sub-blocks are before a last receiving sub-block of a last code block, and the at least two receiving sub-blocks belong to different code blocks, decoding a first received receiving sub-block, and buffering a later received receiving sub-block; or
if the at least two receiving sub-blocks are before a last receiving sub-block of a last code block, and the at least two receiving sub-blocks belong to a same code block, decoupling and decoding a later received receiving sub-block by using a first received receiving sub-block.

Optionally, that the processing unit 902 is configured to decode the encoded data includes:

if one of the at least two receiving sub-blocks is a last receiving sub-block of a last code block, and the at least two receiving sub-blocks belong to different code blocks, separately decoding the at least two receiving sub-blocks; or
if one of the at least two receiving sub-blocks is a last receiving sub-block of a last code block, and the at least two receiving sub-blocks belong to a same code block, jointly decoding the at least two receiving sub-blocks.

For specific execution procedures of the communication unit 901 and the processing unit 902 in this implementation, refer to the descriptions in the method embodiments corresponding to FIG. 4 to FIG. 7. Details are not described herein again. According to the data processing method implemented by the communication apparatus, an encoding method supporting blind decoding is designed. When a quantity of information bits is large, the information bits need to be carried in a plurality of to-be-encoded blocks. In this case, during to-be-encoded block division (that is, code block division), a part of information bits in a subsequent code block are moved to a previous code block, so that a sudden performance change caused by an excessively small subsequent code block during code block switching can be avoided.

The following describes a device including a plurality of functional units shown in FIG. 9. The device in this application includes the plurality of functional units shown in FIG. 9. FIG. 10 is a diagram of a communication device according to this application. The communication device is configured to implement the data processing methods in the foregoing method embodiments. The communication device 1000 may alternatively be a chip system. It may be understood that the communication device 1000 may be, for example, a terminal device, or may be a network device.

The communication device 1000 includes a communication interface 1001 and a processor 1002. The communication interface 1001 may be, for example, a transceiver, an interface, a bus, a circuit, or an apparatus that can implement a receiving function and a sending function. The communication interface 1001 is configured to communicate with another device through a transmission medium, so that the device 1000 may communicate with the another device. The processor 1002 is configured to perform a processing-related operation.

In a possible implementation, the communication interface 1001 is configured to obtain $K$ information bits; the processor 1002 is configured to determine a quantity of to-be-encoded blocks based on the $K$ information bits; determine a quantity of information bits in each of $C$ to-be-encoded blocks based on a maximum mother code length $M$ and a code rate $R$; and encode the $C$ to-be-encoded blocks to obtain encoded data; and the communication interface 1001 is configured to send the encoded data. When $K$ is less than or equal to $M \times R + k$, the quantity of to-be-encoded blocks is $C = 1$; or when $K$ is greater than $M \times R + k$, the quantity of to-be-encoded blocks is $C > 1$, where quantities of information bits in various to-be-encoded blocks other than a $0^{th}$ to-be-encoded block and a last to-be-encoded block are the same and are all $M \times R$, a quantity of information bits in the last to-be-encoded block is less than or equal to $M \times R$, a quantity of information bits in the $0^{th}$ code block is equal to $M \times R + k$, and $k$ is greater than or equal to 0.

For specific execution procedures of the communication interface 1001 and the processor 1002 in this implementation, refer to the first aspect and the descriptions in the method embodiments corresponding to FIG. 4 to FIG. 7, or refer to the descriptions of the communication unit 901 and the processing unit 902 in FIG. 9. Details are not described herein again. According to the data processing method implemented by the communication device, blind decoding can be implemented. When a quantity of information bits is large, the information bits need to be carried in a plurality of to-be-encoded blocks. In this case, during to-be-encoded block division (that is, code block division), a part of information bits in a subsequent code block are moved to a previous code block, so that a sudden performance change caused by an excessively small subsequent code block during code block switching can be avoided.

In another possible implementation, the communication interface 1001 is configured to receive encoded data, and the processor 1002 is configured to decode the encoded data. The encoded data is obtained by encoding $C$ to-be-encoded blocks, a quantity of information bits in each of the $C$ to-be-encoded blocks is determined based on a maximum mother code length $M$ and a code rate $R$, the quantity $C$ of to-be-encoded blocks is determined based on a quantity $K$ of information bits. When $K$ is less than or equal to $M \times R + k$, the quantity of to-be-encoded blocks is $C = 1$; or when $K$ is greater than $M \times R + k$, the quantity of to-be-encoded blocks is $C > 1$, where quantities of information bits in various to-be-encoded blocks other than a $0^{th}$ to-be-encoded block and a last to-be-encoded block are the same and are all $M \times R$, a quantity of information bits in the last to-be-encoded block is less than or equal to $M \times R$, a quantity of information bits in the $0^{th}$ code block is equal to $M \times R + k$, and $k$ is greater than or equal to 0.

For specific execution procedures of the communication interface 1001 and the processor 1002 in this implementation, refer to the second aspect and the descriptions in the method embodiments corresponding to FIG. 4 to FIG. 7, or refer to the descriptions of the communication unit 901 and the processing unit 902 in FIG. 9. Details are not described herein again. The encoded data in the data processing method implemented by the communication device includes a plurality of code blocks, and quantities of information bits in the plurality of code blocks are designed according to a specific rule. In this case, blind decoding can be implemented for the encoded data.

Optionally, the communication device 1000 may further include at least one memory 1003, configured to store program instructions and/or data. In an implementation, the memory is coupled to the processor. The coupling in this application may be an indirect coupling or a communication connection between apparatuses, units, or modules in an electrical form, a mechanical form, or another form, and is used for information exchange between the apparatuses, the units, or the modules. The processor may perform an operation in collaboration with the memory. The processor may execute the program instructions stored in the memory. The at least one memory and the processor are integrated together.

In this application, a specific connection medium between the communication interface, the processor, and the memory is not limited. For example, the memory, the processor, and the communication interface are connected through a bus. The bus 1004 is represented by a thick line in FIG. 10. A manner of a connection between other components is merely an example for description, and is not construed as a limitation. The bus may be classified into an address bus, a data bus, a control bus, and the like. For ease of representation, only one thick line is for representing the bus in FIG. 10, but this does not mean that there is only one bus or only one type of bus.

In this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in this application. The general-purpose processor may be a microprocessor, any conventional processor, or the like. The steps of the methods disclosed with reference to this application may be directly implemented by a hardware processor, or may be implemented by a combination of hardware and a software module in a processor.

In this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction structure or a data structure and that can be accessed by a computer, but is not limited thereto. Alternatively, the memory in this application may be a circuit or any other apparatus that can implement a storage function, and is configured to store program instructions and/or data.

This application provides a communication apparatus. The communication apparatus includes an input/output interface and a logic circuit. The input/output interface is configured to input or output data. The logic circuit processes the data according to the methods in the embodiments corresponding to FIG. 4 to FIG. 7, to obtain processed data.

This application provides a communication apparatus. The communication apparatus includes an input/output interface and a logic circuit. The input/output interface is configured to input or output data. The logic circuit processes the data according to the methods in the embodiments corresponding to FIG. 4 to FIG. 7, to obtain processed data.

This application provides a communication system. The communication system includes the terminal device and the network device in the embodiments corresponding to FIG. 4 to FIG. 7.

This application provides a computer-readable storage medium. The computer-readable storage medium stores a program or instructions. When the program or the instructions are run on a computer, the computer is enabled to perform the data processing methods in the embodiments corresponding to FIG. 4 to FIG. 7.

This application provides a computer program product. The computer program product includes instructions. When the instructions are run on a computer, the computer is enabled to perform the data processing methods in the embodiments corresponding to FIG. 4 to FIG. 7.

This application provides a chip or a chip system. The chip or the chip system includes at least one processor and an interface. The interface and the at least one processor are interconnected through a line. The at least one processor is configured to run a computer program or instructions, to perform the data processing methods in the embodiments corresponding to FIG. 4 to FIG. 7.

The interface in the chip may be an input/output interface, a pin, a circuit, or the like.

The chip system may be a system on chip (system on chip, SoC), or may be a baseband chip, or the like. The baseband chip may include a processor, a channel encoder, a digital signal processor, a modem, an interface module, and the like.

In an implementation, the chip or the chip system described above in this application further includes at least one memory, and the at least one memory stores instructions. The memory may be a storage unit inside the chip, for example, a register or a buffer, or may be a storage unit (for example, a read-only memory or a random access memory) of the chip.

All or some of the technical solutions provided in this application may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, a network device, a terminal device, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In this application, on the premise that there is no logical conflict, embodiments may be mutually referenced. For example, methods and/or terms in the method embodiments may be mutually referenced. For example, functions and/or terms in the apparatus embodiments may be mutually referenced. For example, functions and/or terms in the apparatus embodiments and the method embodiments may be mutually referenced.

It is clear that a person skilled in the art can make various modifications and variations to this application without departing from the scope of this application. This application is intended to cover these modifications and variations of this application provided that they fall within the scope of protection defined by the following claims and their equivalent technologies.

**Claims**

1. A data processing method, comprising:

    obtaining $K$ information bits;
    determining a quantity of to-be-encoded blocks based on $K$;
    determining a quantity of information bits in each of $C$ to-be-encoded blocks based on a maximum mother code length $M$ and a code rate $R$;
    encoding the $C$ to-be-encoded blocks to obtain encoded data; and
    sending the encoded data, wherein
    the determining a quantity of to-be-encoded blocks based on $K$ is specifically:

       when $K$ is less than or equal to $M \times R + k$, $C = 1$; or
       when $K$ is greater than $M \times R + k$, $C > 1$, wherein quantities of information bits in various to-be-encoded blocks other than a $0^{th}$ to-be-encoded block and a last to-be-encoded block are the same and are all $M \times R$, a quantity of information bits in the last to-be-encoded block is less than or equal to $M \times R$, a quantity of information bits in the $0^{th}$ code block is equal to $M \times R + k$, and $k$ is greater than or equal to 0.

2. The method according to claim 1, wherein

$$C = \left\lceil \frac{K - (M \times R + k)}{M \times R} \right\rceil + 1$$

when C > 1,
wherein
quantities of information bits comprised in the $C$ to-be-encoded blocks are: $I_0 = M \times R + k$, $I_c = M \times R$, wherein $c$ satisfies $c \in \{1,2,..., C - 2\}$, and $I_{C-1} = K - M \times R \times (C - 1) - k$; and
the encoded data comprises $C$ code blocks, code lengths of the $C$ code blocks are: $X_{c'} = M$, wherein $c'$ satisfies $c' \in \{0,1,2,..., C - 2\}$, and $X_{C-1} = E - M \times (C - 1)$, wherein $E$ is a total code length corresponding to the $K$ information bits.

3. The method according to claim 1 or 2, wherein the encoded data comprises the $C$ code blocks, each code block comprises $m$ code sub-blocks, and a code sub-block is sent via a sending sub-block;

when a code length of a code block is $X$, a quantity of sending sub-blocks for the code block is $D = \left\lceil \dfrac{X}{N'} \right\rceil$ ; and

when the quantity of sending sub-blocks for the code block satisfies $D > S$, a quantity of code sub-blocks in the code block satisfies $m = S$ ; or
when the quantity of sending sub-blocks for the code block satisfies $D \leq S$ , a quantity of code sub-blocks in the code block satisfies $m = D$, wherein
$N'$ is a code sub-block size; and
$S$ is a maximum value of the quantity of code sub-blocks comprised in the code block.

4. The method according to claim 3, wherein if a last code sub-block in the code block is a repetition sub-block, a $0^{th}$ sending sub-block to an $(m-1)^{th}$ sending sub-block are the $m$ code sub-blocks, and an $m^{th}$ sending sub-block is obtained by performing repetition based on an $(m-1)^{th}$ code sub-block.

5. The method according to claim 3, wherein if a penultimate code sub-block in the code block is a puncturing sub-block, an $(m-1)^{th}$ sending sub-block is obtained by performing puncturing based on the penultimate code sub-block, and remaining $m-1$ sending sub-blocks are remaining $m-1$ code sub-blocks.

6. The method according to claim 4 or 5, wherein
a length of the sending sub-block for the code block is: $Y_j = N'$, wherein $j$ satisfies $j \in \{0,1,2,..., D - 2\}$, and $Y_{D-1} = X - (D - 1) * N'$.

7. The method according to claim 6, wherein

a quantity of information bits in the code sub-block in the code block is $J_i = A_i$, and $i \in \{0,1,2,..., m - 3\}$, wherein
when the quantity of code sub-blocks in the code block satisfies $D > S$ , $J_{m-2} = A_{m-2}$; or
when the quantity of code sub-blocks in the code block satisfies $D \leq S$ , a quantity of information bits in an $(m - 2)^{th}$ code sub-block is

$$J_{m-2} = \frac{A_{m-2} \times Y_{D-1}}{N'} - \Delta$$

, $A_{m-2}$ is an $(S - 2)^{th}$ element in an allocation sequence, and $\Delta$ is determined based on a difference between $Y_{D-1}$ and $N'$, whose value is 0 or 1;
a quantity of information bits in an $(m-1)^{th}$ code sub-block is $J_{m-1} = I - \sum_{i=0}^{m-2} J_i$ ; and

$A_i$ is an element in the allocation sequence, the allocation sequence is a sequence $\{A_0, A_1, A_2,..., A_{S-2}\}$ comprising $S - 1$ variables, and a relationship between elements in the allocation sequence is $A_0 \leq A_1 \leq ... \leq A_{S-2}$.

8. The method according to any one of claims 1 to 7, wherein the encoding the $C$ to-be-encoded blocks to obtain encoded data comprises:

dividing to-be-encoded information bits into $C$ segments based on a quantity of information bits in each code block;
dividing each segment of to-be-encoded bits into $m$ sub-segments based on a quantity of information bits in each code sub-block;
determining an information bit and a frozen bit of each code sub-block based on a code length of each code sub-block and the quantity of information bits in each code sub-block, and constructing an information sequence with a size of $m \times 2^n$ based on the quantity m of code sub-blocks; and
inserting the to-be-encoded information bits into a to-be-encoded sequence based on location information of information bits in the information sequence, and performing modulo two multiplication processing on the to-be-encoded sequence and an encoding matrix $G$ to obtain the encoded data, wherein
the encoding matrix

$$G = \begin{bmatrix} G_{N'} & 0 & \ldots & 0 \\ 0 & G_{N'} & \ldots & 0 \\ \ldots & \ldots & \ddots & \ldots \\ G_{N'} & G_{N'} & \ldots & G_{N'} \end{bmatrix}$$

, $G$ is a matrix with a size of $(m \times 2^n) \times (m \times 2^n)$, m and n are positive integers,

the matrix $G_{N'}$ is a polar generator matrix with a size of $2^n \times 2^n$, and
the matrix $O$ is an all-zero matrix with a size of $2^n \times 2^n$.

9. The method according to any one of claims 3 to 7, wherein an order of sending the code sub-blocks is: first sending the $(m-1)^{th}$ code sub-block, and then successively sending an $i^{th}$ code sub-block, wherein an arrangement order of $i$ is $0,1,2,...,m-2$.

10. The method according to claim 9, wherein an order of sending encoded bits in the sending sub-block is: sending the encoded bits in reverse order based on the length of the sending sub-block starting from an $(N'-1)^{th}$ location of the sending sub-block.

11. A data processing method, comprising:

   receiving encoded data, wherein the encoded data is obtained by encoding $C$ to-be-encoded blocks,
   a quantity of information bits in each of the $C$ to-be-encoded blocks is determined based on a maximum mother code length $M$ and a code rate $R$,
   the quantity $C$ of to-be-encoded blocks is determined based on a quantity $K$ of information bits, and
   when $K$ is less than or equal to $M \times R + k$, $C = 1$, or
   when $K$ is greater than $M \times R + k$, $C > 1$, wherein quantities of information bits in various to-be-encoded blocks other than a $0^{th}$ to-be-encoded block and a last to-be-encoded block are the same and are all $M \times R$, a quantity of information bits in the last to-be-encoded block is less than or equal to $M \times R$, a quantity of information bits in the $0^{th}$ code block is equal to $M \times R + k$, and $k$ is greater than or equal to 0; and
   decoding the encoded data.

12. The method according to claim 11, wherein

$$C = \left\lceil \frac{K - (M \times R + k)}{M \times R} \right\rceil + 1$$

   when $C > 1$,
   wherein
   quantities of information bits comprised in the $C$ to-be-encoded blocks are: $I_0 = M \times R + k$, $I_c = M \times R$, wherein $c$ satisfies $c \in \{1,2,...,C-2\}$, and
   $I_{C-1} = K - M \times R \times (C-1) - k$; and
   the encoded data comprises C code blocks, code lengths of the C code blocks are: $X_{c'} = M$, wherein $c'$ satisfies $c' \in \{0,1,2,...,C-2\}$, and
   $X_{C-1} = E - M \times (C-1)$.

13. The method according to claim 11 or 12, wherein the encoded data comprises the $C$ code blocks, each code block comprises $m$ code sub-blocks, and a code sub-block is sent via a sending sub-block;

   when a code length of a code block is $X$, a quantity of sending sub-blocks for the code block satisfies

$$D = \left\lceil \frac{X}{N'} \right\rceil$$

; and
   when the quantity of sending sub-blocks for the code block satisfies $D > S$, a quantity of code sub-blocks in the code block satisfies $m = S$; or
   when the quantity of sending sub-blocks for the code block satisfies $D \leq S$, a quantity of code sub-blocks in the code block satisfies $m = D$, wherein
   $N'$ is a code sub-block size; and
   $S$ is a maximum value of the quantity of code sub-blocks comprised in the code block.

14. The method according to claim 13, wherein if a last code sub-block in the code block is a repetition sub-block, a $0^{th}$ sending sub-block to an $(m-1)^{th}$ sending sub-block are the $m$ code sub-blocks, and an $m^{th}$ sending sub-block is obtained by performing repetition based on an $(m-1)^{th}$ code sub-block.

15. The method according to claim 13, wherein if a penultimate code sub-block in the code block is a puncturing sub-block, an $(m-1)^{th}$ sending sub-block is obtained by performing puncturing based on the penultimate code sub-block, and remaining $m-1$ sending sub-blocks are remaining $m-1$ code sub-blocks.

16. The method according to claim 14 or 15, wherein a length of the sending sub-block for the code block is: $Y_j = N'$, wherein $j$ satisfies $j \in \{0,1,2,...,D-2\}$, and $Y_{D-1} = X - (D-1)*N'$.

17. The method according to claim 16, wherein

   a quantity of information bits in the code sub-block in the code block is $J_i = A_i$, and $i \in \{0,1,2,..., m-3\}$, wherein
   when the quantity of code sub-blocks in the code block satisfies $D > S$, $J_{m-2} = A_{m-2}$; or
   when the quantity of code sub-blocks in the code block satisfies $D \leq S$, a quantity of information bits in an $(m-2)^{th}$ code sub-block is

$$J_{m-2} = \frac{A_{m-2} \times Y_{D-1}}{N'} - \Delta$$

, $A_{m-2}$ is an $(S-2)^{th}$ element in an allocation sequence, and $\Delta$ is determined based on a difference between $Y_{D-1}$ and $N'$, whose value is 0 or 1;
   a quantity of information bits in an $(m-1)^{th}$ code sub-block is $J_{m-1} = I - \sum_{i=0}^{m-2} J_i$ ; and
$A_i$ is an element in the allocation sequence, the allocation sequence is a sequence $\{A_0, A_1, A_2, ..., A_{S-2}\}$ comprising $S$ - 1 variables, and a relationship between elements in the allocation sequence is $A_0 \leq A_1 \leq ... \leq A_{S-2}$.

18. The method according to any one of claims 11 to 17, wherein the receiving encoded data comprises:

    receiving at least two receiving sub-blocks, wherein the at least two receiving sub-blocks correspond to at least two code sub-blocks; and the decoding the encoded data comprises:

       if the at least two receiving sub-blocks are before a last receiving sub-block of a last code block, and the at least two receiving sub-blocks belong to different code blocks, decoding a first received receiving sub-block, and buffering a later received receiving sub-block; or
       if the at least two receiving sub-blocks are before a last receiving sub-block of a last code block, and the at least two receiving sub-blocks belong to a same code block, decoupling and decoding a later received receiving sub-block by using a first received receiving sub-block.

19. The method according to claim 18, wherein the method further comprises:

    if one of the at least two receiving sub-blocks is a last receiving sub-block of a last code block, and the at least two receiving sub-blocks belong to different code blocks, separately decoding the at least two receiving sub-blocks; or
    if one of the at least two receiving sub-blocks is a last receiving sub-block of a last code block, and the at least two receiving sub-blocks belong to a same code block, jointly decoding the at least two receiving sub-blocks.

20. A data processing apparatus, comprising a unit or a module configured to perform the method according to any one of claims 1 to 19.

21. A communication device, comprising a memory and a processor, wherein

    the memory is configured to store instructions; and
    the processor is configured to execute the instructions, so that the method according to any one of claims 1 to 19 is performed.

22. A communication system, comprising:

    a transmitting end, configured to perform the method according to any one of claims 1 to 10; and
    a receiving end, configured to perform the method according to any one of claims 11 to 19.

23. A chip, comprising a processor and an interface, wherein
    the processor is configured to read instructions to perform the method according to any one of claims 1 to 19.

24. A communication apparatus, wherein the communication apparatus comprises an input/output interface and a logic circuit, the input/output interface is configured to input or output data, and the logic circuit processes the data according to the method according to any one of claims 1 to 10, to obtain processed data.

25. A communication apparatus, wherein the communication apparatus comprises an input/output interface and a logic circuit, the input/output interface is configured to input or output data, and the logic circuit processes the data according to the method according to any one of claims 11 to 19, to obtain processed data.

26. A computer-readable storage medium, comprising a program or instructions, wherein when the program or the instructions are run on a computer, the method according to any one of claims 1 to 19 is performed.

FIG. 1

FIG. 2

| $K$ information bits |
| --- |

⇩ Divide

| $0^{th}$ to-be-encoded block | | $1^{st}$ to-be-encoded block | ... | $(C-1)^{th}$ to-be-encoded block |
| --- | --- | --- | --- | --- |

...

$0^{th}$ to-be-encoded sub-block    $1^{st}$ to-be-encoded sub-block    $2^{nd}$ to-be-encoded sub-block    $(m-1)^{th}$ to-be-encoded sub-block

$0^{th}$ to-be-encoded sub-block    $1^{st}$ to-be-encoded sub-block    $2^{nd}$ to-be-encoded sub-block    $(m-1)^{th}$ to-be-encoded sub-block

⇩ Encode

| $0^{th}$ code block | | $1^{st}$ code block | ... | $(C-1)^{th}$ code block |
| --- | --- | --- | --- | --- |

...

$0^{th}$ code sub-block    $1^{st}$ code sub-block    $2^{nd}$ code sub-block    $(m-1)^{th}$ code sub-block

$0^{th}$ code sub-block    $1^{st}$ code sub-block    $2^{nd}$ code sub-block    $(m-1)^{th}$ code sub-block

⇩ Send

...

$0^{th}$ sending sub-block    $1^{st}$ sending sub-block    $2^{nd}$ sending sub-block    $(D-1)^{th}$ sending sub-block

$0^{th}$ sending sub-block    $1^{st}$ sending sub-block    $2^{nd}$ sending sub-block    $(D-1)^{th}$ sending sub-block

FIG. 3

```
┌────────────────────────────────────┐
│                                    │      ── S101
│        Obtain K information bits    │
│                                    │
└────────────────────────────────────┘
                  │
                  ▼
┌────────────────────────────────────┐
│   Determine a quantity of to-be-    │      ── S102
│   encoded blocks based on the K     │
│         information bits            │
└────────────────────────────────────┘
                  │
                  ▼
┌────────────────────────────────────┐
│  Determine a quantity of information │     ── S103
│  bits in each of C to-be-encoded     │
│  blocks based on a maximum mother    │
│  code length M and a code rate R     │
└────────────────────────────────────┘
                  │
                  ▼
┌────────────────────────────────────┐
│   Encode the C to-be-encoded blocks  │    ── S104
│        to obtain encoded data        │
└────────────────────────────────────┘
                  │
                  ▼
┌────────────────────────────────────┐
│         Send the encoded data        │    ── S105
└────────────────────────────────────┘
```

FIG. 4

If a quantity of information bits in a last code block is less than $k$, cancel the original last code block, where an original penultimate code block becomes a last code block and is transmitted repeatedly

$K$ information bits

The $K$ information bits are segmented

Segment with a length of M

Segment with a length of M

Segment with a length of M

Adjust a quantity of bits between code blocks, and separately move forward by $k$ bits

One code block

One code sub-block

Perform interleaved sending based on code sub-blocks in the code block

$0^{th}$ location

$(N'-1)^{th}$ location

One sending sub-block

Send each sending sub-block in reverse order starting from the $(N'-1)^{th}$ location to the $0^{th}$ location

FIG. 5

FIG. 6

Receive encoded data, where the encoded data is obtained by encoding $C$ to-be-encoded blocks, a quantity of information bits in each of the $C$ to-be-encoded blocks is determined based on a maximum mother code length $M$ and a code rate $R$, and the quantity $C$ of to-be-encoded blocks is determined based on a quantity $K$ of information bits

S201

Decode the encoded data

S202

FIG. 7

FIG. 8

EP 4 550 698 A1

900

901

Communication
unit

902

Processing unit

FIG. 9

1000

1001

Communication
interface

1004

1003

Memory

1002

Processor

FIG. 10

## INTERNATIONAL SEARCH REPORT

International application No.

**PCT/CN2022/110967**

| A. | CLASSIFICATION OF SUBJECT MATTER |
|---|---|

H04L 1/00(2006.01)i

According to International Patent Classification (IPC) or to both national classification and IPC

| B. | FIELDS SEARCHED |
|---|---|

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI: polar, 极化码, 编码, 码率, 母码, 比特, 数目, 数量, 块, 段, 相同, 相等, 盲译码; code block, code rate, segment, bit, number, same, blind decoding

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 109391356 A (HUAWEI TECHNOLOGIES CO., LTD.) 26 February 2019 (2019-02-26) description, paragraphs [0079]-[0099] and [0182]-[0186], and figures 1-5 | 1-26 |
| A | CN 110582961 A (QUALCOMM INCORPORATED) 17 December 2019 (2019-12-17) entire document | 1-26 |
| A | CN 107342844 A (HUAWEI TECHNOLOGIES CO., LTD.) 10 November 2017 (2017-11-10) entire document | 1-26 |
| A | US 2018278389 A1 (HAMELIN LOUIS PHILIPPE et al.) 27 September 2018 (2018-09-27) entire document | 1-26 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 December 2022** | **28 December 2022** |

| Name and mailing address of the ISA/CN | Authorized officer |
|---|---|
| China National Intellectual Property Administration (ISA/CN) No. 6, Xitucheng Road, Jimenqiao, Haidian District, Beijing 100088, China | |
| Facsimile No. (86-10)62019451 | Telephone No. |

Form PCT/ISA/210 (second sheet) (January 2015)

# EP 4 550 698 A1

**INTERNATIONAL SEARCH REPORT**
Information on patent family members

International application No.

**PCT/CN2022/110967**

| Patent document cited in search report | | | Publication date (day/month/year) | Patent family member(s) | | | Publication date (day/month/year) |
|---|---|---|---|---|---|---|---|
| CN | 109391356 | A | 26 February 2019 | CN | 109391356 | B | 12 February 2021 |
| CN | 110582961 | A | 17 December 2019 | CA | 3058689 | A1 | 15 November 2018 |
| | | | | US | 2021119735 | A1 | 22 April 2021 |
| | | | | BR | 112019023004 | A2 | 19 May 2020 |
| | | | | WO | 2018205051 | A1 | 15 November 2018 |
| | | | | KR | 20200006051 | A | 17 January 2020 |
| | | | | EP | 3619852 | A1 | 11 March 2020 |
| | | | | WO | 2018205777 | A1 | 15 November 2018 |
| | | | | JP | 2020521355 | A | 16 July 2020 |
| | | | | TW | 201907682 | A | 16 February 2019 |
| | | | | IN | 201947040784 | A | 18 October 2019 |
| | | | | EP | 3619852 | A4 | 27 January 2021 |
| CN | 107342844 | A | 10 November 2017 | WO | 2018171788 | A1 | 27 September 2018 |
| | | | | EP | 3503445 | A1 | 26 June 2019 |
| | | | | JP | 2019533946 | A | 21 November 2019 |
| | | | | US | 2020287566 | A1 | 10 September 2020 |
| | | | | BR | 112019007341 | A2 | 03 September 2019 |
| | | | | US | 2019260503 | A1 | 22 August 2019 |
| | | | | CN | 109450591 | A | 08 March 2019 |
| | | | | KR | 20190035906 | A | 03 April 2019 |
| | | | | IN | 201917008143 | A | 27 September 2019 |
| | | | | VN | 66234 | A | 25 October 2019 |
| | | | | EP | 3503445 | A4 | 20 November 2019 |
| | | | | US | 10574266 | B2 | 25 February 2020 |
| | | | | KR | 102180186 | B1 | 18 November 2020 |
| | | | | US | 11057054 | B2 | 06 July 2021 |
| | | | | EP | 3503445 | B1 | 07 July 2021 |
| | | | | JP | 6910434 | B2 | 28 July 2021 |
| | | | | CN | 107342844 | B | 02 September 2022 |
| US | 2018278389 | A1 | 27 September 2018 | WO | 2018171485 | A1 | 27 September 2018 |
| | | | | US | 10735154 | B2 | 04 August 2020 |

Form PCT/ISA/210 (patent family annex) (January 2015)